(19) Europäisches Patentamt
European Patent Office
Office européen des brevets

(11) EP 2 935 376 B1

(12) **FASCICULE DE BREVET EUROPEEN**

(45) Date de publication et mention de la délivrance du brevet:
**12.06.2019 Bulletin 2019/24**

(21) Numéro de dépôt: **13831868.8**

(22) Date de dépôt: **20.12.2013**

(51) Int Cl.:
***C08F 230/04*** *(2006.01)* ***C08F 2/44*** *(2006.01)*
***C08F 222/10*** *(2006.01)* ***B01J 20/26*** *(2006.01)*
***B01D 15/38*** *(2006.01)*

(86) Numéro de dépôt international:
**PCT/IB2013/061196**

(87) Numéro de publication internationale:
**WO 2014/097248 (26.06.2014 Gazette 2014/26)**

(54) **POLYMÈRE À EMPREINTE ET PROCÉDÉ DE PRÉPARATION**

GEPRÄGTES POLYMER UND VERFAHREN ZUR HERSTELLUNG DAVON

IMPRINTED POLYMER AND METHOD FOR PREPARING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.12.2012 FR 1262617**

(43) Date de publication de la demande:
**28.10.2015 Bulletin 2015/44**

(73) Titulaire: **Université de Toulon**
**83957 La Garde Cedex (FR)**

(72) Inventeurs:
- **BRANGER, Catherine**
  **F-83210 Sollies-Pont (FR)**
- **BRISSET, Hugues**
  **F-83270 Saint-Cyr Sur Mer (FR)**
- **UDOMSAP, Dutduan**
  **F-06300 Nice (FR)**

(74) Mandataire: **Gevers & Orès**
**41 avenue de Friedland**
**75008 Paris (FR)**

(56) Documents cités:
**EP-A1- 1 642 984** **WO-A1-03/101580**
**US-A1- 2008 264 868** **US-B2- 7 678 870**

- **KRUPADAM R J ET AL: "Fluorescence spectrophotometer analysis of polycyclic aromatic hydrocarbons in environmental samples based on solid phase extraction using molecularly imprinted polymer", ENVIRONMENTAL SCIENCE AND TECHNOLOGY, AMERICAN CHEMICAL SOCIETY. EASTON, PA, US, vol. 43, no. 8, 15 avril 2009 (2009-04-15) , pages 2871-2877, XP008161640, ISSN: 0013-936X, DOI: 10.1021/ES802514C [extrait le 2009-03-13]**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 935 376 B1

Printed by Jouve, 75001 PARIS (FR)

## Description

La présente invention est relative à un polymère à empreinte non conducteur d'électricité obtenu par polymérisation d'au moins un monomère avec au moins un agent réticulant, ledit polymère présentant dans sa structure au moins une cavité ayant la forme d'une cible. L'invention concerne également un procédé de préparation d'un polymère à empreinte, un procédé de détection d'une cible mettant en oeuvre un tel polymère, ainsi que les utilisations d'un tel polymère comme interface active pour la fabrication de capteurs électrochimiques ou pour la fabrication de supports d'extraction en phase solide.

Les micropolluants sont définis comme étant des substances chimiques organiques ou ioniques d'origine naturelle ou anthropique susceptibles d'avoir une action toxique à des concentrations infimes dans un milieu donné. Dans les eaux, ces contaminants sont très variés : pesticides, stéroïdes, hydrocarbures aromatiques polycycliques (HAPs), principes actifs, tensioactifs, cosmétiques, ions métalliques, microtoxines, toxines bactériennes, etc. Ces polluants font l'objet d'une surveillance attentive, en particulier dans les eaux destinées à la consommation humaine (Directive 98/83/CE du Conseil du 3 novembre 1998, Journal Officiel Des Communautés Européennes).

L'analyse de traces de micropolluants s'avère toutefois délicate et nécessite au préalable la mise en place d'un prétraitement, suivi de l'utilisation de techniques de détection telles que la chromatographie en phase liquide couplée à une détection par fluorescence, par UV-visible ou par spectrométrie de masse, ou la chromatographie en phase gaz couplée à la spectrométrie de masse (P. Plaza-Bolaños et al., Analytical methods and trends, J. Chrom. A., 1217 (2010) 6303-6326). Ces techniques, bien que très performantes, ne peuvent cependant être mises en oeuvre qu'en laboratoire. Elles présentent en outre l'inconvénient de requérir des délais parfois très longs, ce qui limite les possibilités d'interventions rapides lors d'un épisode de pollution. Le contrôle en temps réel, donc *in situ,* de ces agents toxiques nécessite le développement de capteurs alliant miniaturisation, rapidité, faible coût et facilité de mise en oeuvre.

Il existe trois grandes catégories de capteurs ayant des modes de transduction différents : optique, piézoélectrique ou électrochimique :

- la solution optique, généralement très sensible, se prête difficilement à la miniaturisation en raison d'un rapport bruit/signal important (X.-A. Ton et al., Biosens. Bioelec., 36 (2012) 22-28 ; P. Turkewitsch et al., Anal. Chem. 1998, 70, 2025-2030),
- la voie piézoélectrique reste délicate à mettre en oeuvre dans le cas d'analyses en milieu liquide (C.-Y, Lin et al., Chem. Eur. J. 2003, 9, 5107-5110),
- les capteurs électrochimiques présentent quant à eux l'avantage de pouvoir être miniaturisés sans perte de sensibilité en raison d'un faible rapport bruit/signal. Ils présentent en outre un faible coût de production. Toutefois, dans le cas de matrices complexes, il est nécessaire pour pouvoir les analyser d'introduire dans le capteur électrochimique des sites de reconnaissance spécifiques de l'analyte pour en améliorer la détection et/ou la quantification ; c'est dans ce cadre que se sont développés les capteurs électrochimiques à empreinte moléculaire (V. Suryanarayanan et al., Electroanal., 22 (2010) 1795-1811) et les capteurs électrochimiques à empreinte ionique (T. Prasada Rao et al., Anal. Chim. Acta, 578 (2006) 105-116).

Le principe des capteurs à empreinte est basé sur l'utilisation de polymères à empreinte moléculaire (Molecularly Imprinted Polymer : MIP) ou de polymères à empreinte ionique (Ion Imprinted Polymer : IIP).

Les polymères à empreinte sont des réseaux polymères tridimensionnels préparés en présence d'une molécule cible ou d'un ion cible autour desquels se construit le réseau polymère via des interactions spécifiques entre la cible et un monomère fonctionnel, en présence d'un agent réticulant. Le relargage de la molécule empreinte ou de l'ion empreinte génère des cavités incorporant des fonctionnalités complémentaires à celle-ci (Figure 1). Ces matériaux présentent donc un haut pouvoir de reconnaissance moléculaire ou ionique, leur activité mimant celle de récepteurs biologiques de type anticorps (K. Haupt et al., Chem. Rev., 100 (2000) 2495-2504), les MIPs ou les IIPs étant plus stables, plus faciles et moins chers à fabriquer que les anticorps et pouvant être stockés pendant des durées assez longues avant utilisation (V. Pichon, J. Chrom. A., 1152 (2007) 41-53).

Deux voies de synthèse sont envisageables pour la réalisation de capteurs électrochimiques à empreinte moléculaire ou ionique :

- Une première voie dans laquelle l'empreinte est générée au sein d'un polymère conducteur d'électricité exempt d'agent réticulant, ce dernier ayant le double rôle de reconnaissance et de transducteur, le phénomène de reconnaissance étant transformé en un signal électrique mesurable. Cette voie présente de nombreux avantages, et notamment une facilité de mise oeuvre, un contrôle de l'épaisseur du film électrogénéré, la possibilité de déposer le système de détection précisément sur une surface donnée (T. L. Panasyuk et al., Anal. Chem. 71 (1999) 4609-4613). Leur utilisation implique néanmoins l'application de mesures électrochimiques qui peuvent conduire, par exemple, à l'entrée et à la sortie de contre-ions dans le polymère conducteur. Ces mesures altèrent l'empreinte,

notamment du fait de la non réticulation du réseau polymère, et, à terme, la capacité du capteur à piéger spécifiquement la cible.

- Une deuxième voie dans laquelle le MIP et le transducteur sont des éléments distincts. Cette voie consiste en l'incorporation de particules de MIPs ou IIPs préalablement préparées et réticulées au sein d'une phase conductrice pouvant être un polymère conducteur d'électricité (K. Ho et al., Anal. Chim. Acta, 542 (2005) 90-96), ou encore une électrode à base de pâte de carbone (N. Kirsch et al., Analyst. 126 (2001) 1936-1941). Dans ce cas, le risque de dénaturer l'empreinte diminue, l'inconvénient étant une transmission de l'information plus difficile entre le MIP ou l'IIP qui a piégé la cible et la phase conductrice de l'électrode.

Ainsi, le problème technique restant à résoudre par rapport à cet état de l'art consiste en la mise au point d'un polymère à empreinte réticulé permettant une transmission efficace du phénomène de reconnaissance en un signal électrique ou électrochimique mesurable.

Le problème technique de l'invention réside plus particulièrement dans la mise au point d'un polymère à empreinte remplissant la fonction de capteur à empreinte, en permettant une détection directe d'une cible par transmission directe du phénomène de reconnaissance en un signal électrique ou électrochimique mesurable, sans qu'il soit nécessaire d'utiliser des moyens de transmission (électrochimie, fluorescence...) supplémentaires. En ce sens, le brevet américain US 7678870B2 décrit un polymère à empreinte comprenant des lanthanides chélatés, en particulier un complexe d' Europium. Ces lanthanides jouent le rôle de sonde rédox unique non polymérisable pour les composés organophosphorés.

La solution proposée par les Inventeurs est un nouveau polymère à empreinte intégrant dans sa structure une sonde rédox polymérisable comme moyen de transmission du signal, les Inventeurs ayant observé que la présence d'une sonde rédox proche du site de reconnaissance améliore significativement sa sensibilité de détection. Le polymère à empreinte mis au point par les Inventeurs présente également une grande stabilité et une longue durée de stockage avant utilisation. Il peut en outre être fabriqué facilement via un procédé économiquement avantageux.

Le polymère à empreinte de l'invention présente également l'avantage d'être utilisable avec tout type de cible, sans que cette cible ne présente nécessairement des propriétés rédox, la détection de la cible se faisant via la sonde rédox.

L'invention concerne donc un polymère à empreinte non conducteur d'électricité obtenu par polymérisation d'au moins un monomère avec au moins un agent réticulant en présence d'une cible, ledit polymère présentant dans sa structure au moins une cavité ayant la forme de ladite cible, et comprenant dans sa structure au moins une sonde rédox se présentant sous forme polymérisable.

Au sens de l'invention, on entend par sonde rédox tout composé susceptible d'être oxydé et/ou réduit.

De préférence, la sonde rédox se situe à proximité de la cavité ayant la forme d'une cible. On entend par « proximité » la distance minimale pour que la sonde rédox soit capable d'interagir avec la cible et de fournir une réponse électrochimique sous forme de signal de détection. L'obtention d'une réponse électrochimique permet de considérer la sonde rédox comme étant à proximité ou au voisinage de la cavité ayant la forme d'une cible. Autrement dit, la sonde rédox est située dans le polymère à empreinte de l'invention de manière à ce qu'elle puisse interagir avec la cible et fournir une réponse électrochimique sous forme d'un signal de détection. De manière avantageuse, la sonde rédox se situe dans la cavité ayant la forme d'une cible, et fait partie de cette cavité.

Le polymère à empreinte de l'invention ne comprend pas d'autre moyen de transmission (électrochimie, fluorescence...), autre que la sonde rédox présente dans la structure du polymère.

Au sens de l'invention, on entend par cible toute entité pouvant être utilisée pour former la cavité (ou empreinte) et capable d'interagir ultérieurement de façon spécifique avec cette cavité, cette cible pouvant être soit une molécule, soit un ion. La cavité joue ainsi le rôle de site de reconnaissance de la cible. La cavité est donc complémentaire en forme et/ou en fonctionnalité de la cible. Le polymère à empreinte de l'invention peut donc être soit un polymère à empreinte moléculaire (MIP), soit un polymère à empreinte ionique (IIP).

Lorsque la cible est une molécule, cette dernière peut être choisie parmi les hydrocarbures aromatiques polycycliques (HAPs) ; les stéroïdes ; les principes actifs ; les pesticides ; les herbicides ; les tensioactifs ; les colorants alimentaires tels que les caroténoïdes, les riboflavines, la tartrazine, l'amarante ; les colorants tels que les colorants azoïques, les colorants polyméthiniques, la phtalocyanine ; les molécules biologiquement actives telles que les polypeptides, les protéines, les enzymes, les hormones, les cytokines.

Lorsque la cible est un HAP, ledit HAP peut être l'acénaphtène, l'acénaphtylène, l'anthracène, le benz[*a*]anthracène, le benzo[*a*]pyrène, le benzo[*e*]pyrène, le benzo[*b*]fluoranthène, le benzo[e]pyrène, le benzo[*ghi*]perylène, le benzo[*j*]fluoranthène, le benzo[*f*]fluoranthène, le benzo[*k*]fluoranthène, le chrysène, le coronène, le carannulène, le cyclopenta(c,d)pyrène, le dibenzo(a,e)pyrène, le dibenz(a,c)anthracène, le dibenz(a,h)anthracène, le dibenzo(a,h)pyrène, le dibenzo(a,i)pyrène, le dibenzo(a,l)pyrène, le fluoranthène, le fluorène, l'indéno(1,2,3-cd)pyrène, l'ovalène, le pentacène, le pérylène, le phénanthrène, le pyrène, le tétracène, le triphénylène, le zethrène.

Lorsque la cible est un pesticide, ledit pesticide peut être un acaricide, un bactéricide, un corvicide ou corvifuge, un fongicide, un insecticide, un molluscicide, un nématicide, un parasiticide, un rodenticide, un taupicide.

Lorsque la cible est un herbicide, ledit herbicide peut être un herbicide minéral choisi parmi cyanure de calcium ($Ca(CN)_2$), le sulfate de fer ($FeSO_4$), le chlorate de sodium ($NaClO_3$), ou un herbicide organique choisi parmi le glyphosate, les dinitroanilines (toluidines, benfluraline, butraline, fluchloraline, nitraline, orysaline, pendiméthaline, trifluraline), les urées substituées (chlortoluron, chloroxuron, cycluron, diuron, éthidimuron, fénuron, isoproturon, linuron, monolinuron, méthabenzthiazuron, métobromuron, métoxuron, monuron, thiazafluron, tebuthiuron, thiazafluron, siduron, néburon), les triazines (atrazine, cyanazine, méthoprotryne, propazine, terbuthylazine, simazine, simétryne, secbumeton, terbuméton, amétryne, desmétryne, prométryne, terbutryne), les imidazolinones (imazaméthabenz, imazapyr), les sulfonylurées (amidosulfuron, azimsulfuron, chlorsulfuron...), les dyphényls-éthers (acifluorfène-sodium, aclonifen, bifénox, bromofénoxime, chlométhoxyfène, diclofop-méthyle, fluorodifène, fomesafen, lactofène, nitrofène, oxyfluorfène), les phytohormones de synthèse (2,4-D, 2,4-MCPA, triclopyr, dichlorprop, MCPP (mécoprop), 2,3,6-TBA, dicamba, piclorame, clopyralid, flurénol), les colorants nitrés (DNBP (dinosèbe), DNOC (Dinitro-Ortho-Crésol), dinoterbe, PCP (pentachlorophénol), les carbamates (asulame, barbame, chlorbufame, chlorprophame, prophame, carbétamide), les thiocarbamates (butilate, cycloate, diallate, triallate, S-ethyl-N,N-dipropylthiocarbamate, molinate, prosulfocarbe, vernolate, pédulate, thiobencarbe), les dithiocarbamates (méthylaminométhanedithioate de sodium, nabame), les biscarbamates (desmédiphame, phenmédiphame, karbutylate), les ammoniums quaternaires (diquat, paraquat, difenzoquat), fop/dime et pinoxaden (alloxydime-sodium, clodinafop-propargyl).

La sonde rédox possède au moins un site polymérisable, et le monomère de l'invention est donc la sonde rédox. Le monomère rédox est alors introduit sous la forme d'un monomère participant à la construction même du réseau tridimensionnel (Figure 2).

Lorsque le système rédox présente deux ou plusieurs sites polymérisables, l'agent réticulant peut être la sonde rédox. La sonde rédox est alors introduite sous la forme d'un agent réticulant participant à la construction même du réseau tridimentionnel (Figure 2),

La sonde rédox peut donc être une entité chimique possédant :

- un site polymérisable : la sonde rédox se présente alors sous forme polymérisable et joue le rôle de monomère, ou
- au moins deux sites polymérisables : la sonde rédox se présente alors sous forme polymérisable et joue le rôle d'agent réticulant.

La sonde rédox peut être choisie, par exemple, parmi les métallocènes tels que le ferrocène, le ruthénocène, le cobaltocène, le tétrathiafuvalène et ses dérivés, ou l'anthraquinone et ses dérivés. Avantageusement, la sonde rédox peut être choisie, par exemple, parmi les métallocènes tels que le ferrocène et le cobaltocène, ou le tétrathiafuvalène et ses dérivés.

Selon un mode de réalisation avantageux, la sonde rédox est de préférence un monomère rédox participant à la construction même du réseau tridimentionnel. Ledit monomère rédox est de préférence un monomère porteur d'au moins une fonction de type ferrocène ayant un site polymérisable, ledit site polymérisable étant de préférence choisi parmi les sites vinylique, (méth)acrylique ou allylique. La sonde rédox de l'invention est avantageusement le vinylferrocène (VFc).

L'agent réticulant est avantageusement un monomère (méth)acrylique, vinylique, styrénique, ou allylique, de préférence choisi parmi les groupes di, tri ou tétra-fonctionnels. Selon un mode de réalisation préféré de l'invention, l'agent réticulant est un alkyle di, tri ou tétra-(méth)acrylate, un allyle di, tri ou tétra-(méth)acrylate, un aryle di, tri ou tétra-(méth)acrylate, un alkylène glycol di, tri ou tétra-(méth)acrylate, et plus préférentiellement l'éthylène glycol di(méth)acrylate (ED(M)A), le di(méth)acrylate de tétraméthylène, le bis-phénol A di(méth)acrylate, le triméthylol propane tri(méth)acrylate, le pentaérythritol triacrylate (PETRA) et tétraacrylate, le tétraéthylène glycol di(méth)acrylate, triéthylène glycol di(méth)acrylate, l'hexanediol di(méth)acrylate, le 3-(acryloyloxy)-2-hydroxypropyl méthacrylate, le diallyldiglycol dicarbonate, le diallyl maléate, le diallyl fumarate, le diallyl itaconate, le diallyl succinate, le diallyl phtalate, le triallyl isocyanurate, le triallyl mélamine, le divinylbenzène, le divinyl oxalate, le divinyl malonate, le divinyl éther, le divinyl sulfone, le N,N'-méthylène bisacrylamide (MBA), et leur mélange.

Au sens de la présente invention, on entend par :

- Alkyle : un groupe aliphatique hydrocarboné saturé, linéaire ou ramifié, ayant au moins un atome de carbone, et de préférence de 1 à 30 atomes de carbone. Avantageusement, le terme « alkyle » désigne un groupe aliphatique hydrocarboné saturé, linéaire ou ramifié ayant de 1 à 12 atomes de carbone, et préférentiellement de 1 à 6 atomes de carbone. Le terme « ramifié » signifie qu'au moins un groupe alkyle inférieur tel qu'un méthyle ou un éthyle est porté par une chaîne alkyle linéaire. A titre de groupe alkyle, on peut mentionner par exemple les groupes méthyle, éthyle, *n*-propyle, *i*-propyle, *n*-butyle, *t*-butyle et n-pentyle ;
- Aryle : un groupe fonctionnel ou substituant dérivé d'au moins un cycle aromatique ; un cycle aromatique correspond à tout groupe mono- ou polycyclique plan comportant un système $\pi$ délocalisé dans lequel chaque atome du cycle comporte une orbitale p, lesdites orbitales p se recouvrant les unes aux autres.

Lorsque la cible est un ion, ce dernier est de préférence un ion d'un des éléments suivants : Ni, Pb, Cu, Cd, Co, Zn, Fe, Ag, Hg, As, Pd, Mn, Rh, Al, Sm, Zr, Th, Nd, Eu, Dy, Cr, I, Yt, Tl, Pt.

Lorsque la cible est un ion, le polymère à empreinte de l'invention peut également comprendre dans sa structure au moins un ligand se présentant soit sous forme polymérisable, soit sous forme non polymérisable.

Lorsque le ligand se présente sous forme non polymérisable, il peut être choisi parmi les composés suivants : 4-vinylpyridine, 2-vinylpyridine, 1-vinylimidazole, acrylamide, acide (méth)acrylique, 2-hydroxyéthylméthacrylate, N-isopropylacrylamide, 2-(diéthylamino)méthylméthacrylate, styrène, 1,4-dihydroxyanthraquinone, dithizone, diméthylglyoxime, 5-dodécylsalicylaldoxime, 8-hydroxyquinoline, 8-aminoquinoline, 8-mercapto quinoline, acétylacétone, acétaldéhyde thiosemicarbazone, benzaldéhyde thiosemicarbazone, vaniline benzidine, 1,5-diphénylcarbazone, ammonium pyrrolidinedithiocarbamate, N,N'-diéthylthiourée, 5,7-dichloroquinoline-8-ol, 4-(2-pyridylazo)résorcinol, 4-(2-thiazolylazo)resorcinol, 1-(2-pyridylazo)-2-naphthol, 1-(2-thiazolylazo)-2-naphthol, salen, acide 8-hydroxyquinoline-5-sulfonique, acide 1-pyrrolidinedithiocarboxylique, 1-(2-thiazolylazo)-2-naphthol, sel de sodium du 3,4-dihydroxy-9,10-dioxo-2-anthracènesulfonique (alizarin red S), 2-éthylhexyl benzimidazolyl sulfide, sulfure d'octyl benzothiazolyl, diazoaminobenzène, acide quinaldique, 6-[(hydroxyamino)méthylidène]cyclohexa-2,4-dièn-1-one (salicylaldoxime), 5-(4-carboxylphénylazo)-8-hydroxyquinoline, formamidoxine, néocuproïne.

Lorsque le ligand se présente sous forme polymérisable, il peut être choisi parmi les composés suivants : acide [N-(4-vinylbenzyl)imino]diacétique, 1-hydroxy-4-(prop-2'-enyloxy)-9,10-anthraquinone, 1-hydroxy-2-(prop-2'-ényl)-9,10-anthraquinone, 5-vinyl-8-hydroxyquinoline, N-(6,7,9,10,12,13,15,16-octahydro-5,8,11,14,17-pentaoxabenzocyclopentadécèn-2-yl acrylamide (benzo-15-crown-5-acrylamide), (4-[(E)-2-(4'-méthyl-2,2'-bipyridin-4-yl)vinyl]phényl méthacrylate, 4-vinyl phénylazo-2-naphthol, N-méthacryloyl-(L)-histidine, N-méthacryloyl-(L)-cystéine, N-méthacryloyl-(L)-cysteine méthyl ester, N-acide méthacryloyl-(L)-glutamique, N-méthacryloyl-2-mercaptoéthylamine, acide 6-(4-vinylphénylcarbamoyl)pyridine-2-carboxylique, acide pyridine-2,6-dicarboxylique bis(4-vinylphényl)amide, salen, (4-éthènylphényl)-4-formate-6-phényl-2,2'-bipyridine,

Selon un mode de réalisation préféré, le polymère à empreinte de l'invention se présente sous la forme de microparticules réticulées, de taille pouvant varier de 0,6 à 6 μm.

Un autre objet de l'invention concerne un procédé de préparation d'un polymère à empreinte comprenant les étapes suivantes :

(i) la polymérisation d'un monomère avec un agent réticulant en présence d'une cible et d'une sonde rédox se présentant sous forme polymérisable, ledit monomère étant alors, la sonde rédox et ledit agent réticulant pouvant être la sonde rédox lorsque ce dernier présente deux ou plusieurs sites polymérisables, et
(ii) l'élimination de la cible présente au sein du polymère obtenu à l'issu de l'étape (i).

Selon un mode de réalisation avantageux, l'étape de polymérisation est réalisée par polymérisation radical aire, par polycondensation ou par voie sol-gel. L'étape de polymérisation peut aussi être réalisée par polymérisation ionique. Les techniques de polymérisation suivantes peuvent être mises en oeuvre : polymérisation en masse, en suspension, en dispersion, en émulsion et par précipitation. De préférence, la polymérisation par précipitation-distillation au cours de laquelle la distillation du solvant est concomitante à la réaction de polymérisation peut être utilisée.

Dans le cas d'une polymérisation par précipitation-distillation, l'étape (i) est réalisée dans un solvant choisi de préférence parmi l'acétonitrile, le toluène, l'acétone, l'éthanol, le méthanol, le *n*-hexane, le tétrahydrofurane, l'acétate d'éthyle, le méthyle d'éthyle, le cyclohexane, le 2-méthoxyéthanol, le diméthylsulfoxide, le N,N'-diméthylformamide, le chloroforme, le 1,2-dichloroéthane, le dichlorométhane, le cyclohexanol, l'alcool benzylique, l'acétate d'éthyle.

Le solvant permet de contrôler la taille des particules de polymère et leur porosité. Selon un mode de réalisation préféré, le solvant de l'invention est un solvant polaire, ou un mélange solvant polaire/solvant apolaire, dont le ratio peut varier de 95/5 à 70/30. De manière préférée, le solvant de l'invention est l'acétonitrile ou un mélange acétonitrile/toluène, éventuellement dans une proportion allant de 95/5 à 80/20, et de préférence à un ratio 80/20.

Avantageusement, l'étape (i) est réalisée par polymérisation par précipitation-distillation en chauffant le milieu réactionnel à une première température comprise entre 60°C et 100°C, puis en le portant à reflux de préférence à une température comprise entre 100 et 150°C pour réaliser la distillation.

L'étape de polymérisation peut être réalisée en présence d'un amorceur radicalaire thermique ou UV. Des exemples d'amorceurs thermiques ou UV incluent l'azobisisobutyronitrile, le peroxyde de benzoyle, l'acétyle peroxyde, le lauryle peroxyde, l'azobisisobutyronitrile, le *t*-butyle péracétate, le peroxyde de cumyle, le *t*-butyle peroxyde, le *t*-butyle hydroperoxyde, le 2,2-diméthyoxy-2-phénylacétophénone, le phénothiazine, le 1,1'-azobis-(cyclohexanecarbonitrile), le 2,2'-azobis(2-méthylpropionamidine) dihydrochloride, le 2,2'-(2-méthyl propionitrile), le persulfate de potassium, le mélange $H_2O_2$/TEMED (N,N,N',N'-tétraméthylène diamine), et de préférence l'azobisisobutyronitrile.

Selon un mode de réalisation avantageux, l'étape (ii) d'élimination de la cible est réalisée par lavage du polymère obtenu à l'issu de l'étape (i) avec une solution de lavage choisie parmi le dichlorométhane, l'acétone, l'isopropanol, le méthanol, le N,N-diméthylformamide, le diméthylsulfoxyde, la N-méthylpyrrolidone, le chloroforme, le toluène, l'éthanol,

le 2-méthoxyéthanol, le 1,2-dichloroéthane, l'acétate d'éthyle, le diéthyéther, les solutions acides (HCl, $H_2SO_4$, $HNO_3$) ou basiques (NaOH, KOH) contenant de l'EDTA (éthylène diamine tétraacétate), ou leur mélange. Le lavage peut être réalisé pendant une durée allant de 1 à 48 heures, de préférence pendant une durée de 24 heures, et peut être répétée deux à quatre fois, de préférence trois fois.

De préférence, l'étape (ii) est réalisée sous agitation.

Un procédé de détection d'une cible fait également partie de l'invention, ledit procédé comprenant au moins les étapes suivantes :

(i') la mise en contact d'un échantillon comprenant une cible avec un polymère à empreinte tel que défini selon l'invention, et

(ii') la détection de la cible, de préférence par mesure électrique (conductivité, impédance) ou par une méthode électrochimique (chronopotentiométrie, chronoampérométrie, voltampérométrie).

La cavité présente dans la structure du polymère à empreinte sert de logement à la cible, plus communément appelé site de reconnaissance (à la cible), la sonde rédox étant située de manière à ce qu'elle puisse interagir avec la cible et fournir une réponse électrochimique sous forme d'un signal de détection. La sonde rédox est typiquement située à proximité ou au sein de ladite cavité permettant la détection de la cible.

Le polymère à empreinte de l'invention trouve des applications dans la détection, l'extraction en phase solide, la séparation, la purification, la libération contrôlée des molécules et ions, dans les domaines du (bio)médical, de l'agroalimentaire et de l'environnement.

Notamment, le polymère à empreinte de l'invention peut être utilisé :

- en tant que capteur, et de préférence en tant que capteur à empreinte, et plus précisément comme phase de reconnaissance dans un capteur dans le domaine de la détection des molécules et/ou des ions,
- comme interface active pour la fabrication de (bio)capteurs,
- comme support d'extraction en phase solide pour la fabrication de colonne d'extraction en phase solide des molécules et ions,
- pour la chromatographie,
- pour des pseudo-immuno essais,
- pour la fabrication d'anticorps artificiels,
- pour la séparation d'énantiomères,
- pour la synthèse organique,
- pour la catalyse.

Selon un mode de réalisation particulièrement préféré, le polymère à empreinte de l'invention est utilisé comme capteur, et plus particulièrement comme phase de reconnaissance dans un capteur. On parle alors de capteur à empreinte.

Un autre objet concerne un dispositif incluant au moins un polymère à empreinte tel que défini selon l'invention, ledit dispositif étant un (bio)capteur électrochimique ou une colonne d'extraction.

Outre les dispositions qui précèdent, l'invention comprend encore d'autres dispositions qui ressortiront de la description qui va suivre, qui se réfère à des exemples non limitatifs de procédé de fabrication d'un polymère à empreinte selon l'invention et à l'évaluation d'un tel polymère, ainsi qu'aux dessins annexés dans lesquels :

- la **Figure 1** schématise le principe d'élaboration d'un MIP,
- la **Figure 2** montre l'introduction d'une sonde rédox au sein d'un MIP,
- la **Figure 3** représente les spectres IRTF du polyEDMA, du ferrocène, du MIP6 et du NIP6,
- la **Figure 4** représente des images MEB des particules des polymères MIP5 et NIP5,
- la **Figure 5** représente des images MEB des particules des polymères MIP6 et NIP6,
- la **Figure 6** représente l'isotherme d'adsorption du polymère MIP5 selon l'invention et d'un polymère sans empreinte moléculaire NIP5 correspondant dans le toluène,
- la **Figure 7** représente l'isotherme d'adsorption du polymère MIP5 selon l'invention et du polymère NIP5 dans un mélange eau/acétonitrile (99/1, v/v),
- la **Figure 8** représente le signal observé en voltampérométrie à impulsion différentielle (DPV) avec le polymère NIP5 avant et après ajout d'une cible BaP,
- la **Figure 9** représente le signal observé en voltampérométrie à impulsion différentielle (DPV) avec le polymère MIP5 avant et après ajout de la cible BaP,
- la **Figure 10** montre la cinétique d'adsorption du BaP sur le polymère MIP6 en fonction du temps,
- la **Figure 11** représente la capacité d'adsorption (Q) de différents polymères en fonction de la concentration initiale

de solutions de BaP,

- la **Figure 12** représente les voltammogrammes SWV du NIP6 en l'absence (courbe du haut) et en présence de BaP après 4 heures de contact (courbe du bas), et
- la **Figure 13** représente les voltammogrammes SWV du MIP6 en l'absence (courbe du haut) et en présence de BaP après 4 heures de contact (courbe du bas).

**PARTIE EXPÉRIMENTALE :**

L'invention est décrite ci-après en relation avec un exemple d'application concernant la détection d'une cible choisie dans la famille des hydrocarbures aromatiques polycycliques (HAPs), le benzo[*a*]pyrène (BaP), dans un milieu liquide. L'invention est néanmoins d'application plus générale, quelque soit la nature de la cible (molécule ou ion) et/ou la nature du milieu, pourvu que la sonde rédox puisse réagir avec la cible en fournissant un signal de détection.

**Préparation de polymères à empreinte** :

Des polymères à empreinte moléculaire (MIP) selon l'invention sont préparés à partir de vinylferrocène (VFc) (monomère rédox) et d'éthylène glycoldiméthacrylate (EDMA) (agent réticulant), en présence d'une cible choisie dans la famille des hydrocarbures aromatiques polycycliques (HAPs), le benzo[*a*]pyrène (BaP) (Schéma 1).

Schéma 1 : Synthèse d'un polymère à empreinte selon l'invention

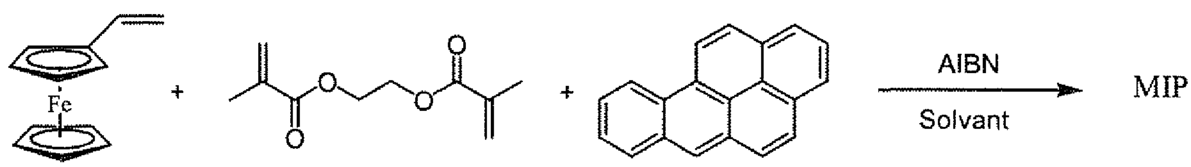


VFc EDMA BaP

*Procédé de synthèse des polymères à empreinte :*

Les polymères à empreinte de l'invention sont préparés par polymérisation par précipitation-distillation (F. Bai et al., Macromolecules, 2004, Vol. 37, 9746-9752).

Le montage est constitué d'un ballon de 100 mL, d'un Dean-Stark (rempli avec le même solvant que celui servant pour la polymérisation, ou avec un mélange de solvants) et d'un réfrigérant. Dans le ballon muni d'un agitateur magnétique, sont introduits le vinylferrocène (VFc), l'éthylène glycoldiméthacrylate (EDMA) et la cible benzo[*a*]pyrène (BaP).

Le solvant est ensuite ajouté (différents mélange de solvants ont été testés, voir Tableau 1), puis le ballon est passé aux ultrasons pour solubiliser le solide.

100 μL de la solution sont prélevés pour analyse UV-Vis (détermination des quantités exactes introduites). La solution est dégazée pendant 10 minutes.

Un amorceur, l'azobisisobutyronitrile (AIBN) est ajouté à la solution, puis le milieu est dégazé pendant 5 minutes.

Tout en maintenant l'agitation constante à une vitesse de 100 rpm, la solution est chauffée à une température de 80°C pendant 30 minutes, puis la température est augmentée jusqu'à environ 115°C. La distillation est réalisée à cette température pendant 30 minutes, le Dean-Stark vidé et l'équivalent de la moitié du volume du solvant de synthèse distillé.

Tableau 1 : Conditions opératoires testées pour la préparation de polymères à empreinte selon l'invention

| | Solvant (%v/v) | | BaP/VFc/ EDMA (w/w) | Vitesse d'agitation (rpm) | T (°C) | Durée | Rendement (avant et après lavage au dichlorométhane) (%) | | Taux de conversion du VFc | Aspect |
|---|---|---|---|---|---|---|---|---|---|---|
| | Acétonitrile | Toluène | | | | | avant | après | | |
| MIP1 | 100 | 0 | 1/4,7/24 | 100 | 80-115 | 1h15 | 62 | 26 | 63 | Sphères de taille polydisperse avec des bâtonnets |
| MIP2 | 95 | 5 | 1/4,4/25,3 | 100 | 80-115 | 1h20 | 42 | 18 | 51 | Mélange de sphères de taille polydisperse avec des particules éponge |
| MIP3 | 90 | 10 | 1/5/21 | 100 | 80-115 | 1h20 | 57 | 25 | 47 | Mélange de sphères de taille polydisperse avec des bâtonnets |
| MIP4 | 85 | 15 | 115,5130 | 100 | 80-115 | 1h15 | 46 | 19 | 21 | Mélange de sphères de taille polydisperse avec des bâtonnets |
| MIP5 | 80 | 20 | 1/4,1/21,4 | 100 | 80-115 | 1h15 | 74 | 31 | 46 | Sphères de taille quasi-monodisperse |
| MIP6 | 70 | 30 | 1/4/20 | 100 | 80-115 | 1h50 | 70 | 33 | 23 | Sphères de taille quasi-mono disperse |

Les polymères à empreinte de l'invention sont ensuite lavés afin d'éliminer la cible qui a servi à la réalisation de l'empreinte pendant la polymérisation.

Le relargage de la cible BaP est réalisé par mise en contact du polymère avec 10 mL de dichlorométhane, sous agitation, pendant une durée de 24 heures. Cette opération est réitérée trois fois (3 cycles de 24 heures), avec une efficacité de 93%.

En parallèle, des polymères sans empreinte moléculaire (Non-Imprinted Polymers, NIPs) ont été préparés dans les mêmes conditions que les MIPs de l'invention hormis la présence de la cible. Aussi, ces polymères ne possèdent pas de cavité ayant la forme d'une cible.

*Caractérisation des polymères à empreinte :*

Analyse infrarouge :

Le polymère à empreinte moléculaire MIP6 et le polymère sans empreinte moléculaire NIP6 sont caractérisés par infrarouge (appareillage Nexus-ThermoNicolet). Les échantillons sont préparés sous forme de pastille KBr. La comparaison des spectres IRTF du MIP6 et du NIP6 avec ceux d'un polyEDMA et du ferrocène permet de mettre en évidence l'incorporation correcte de la sonde rédox VFc dans la matrice polymère à base d'EDMA. Les pics caractéristiques de l'EDMA et du ferrocène se retrouvent aussi bien dans le MIP6 que dans le NIP6 (**Figure 3**).

Analyse par microscopie électronique à balayage (MEB) :

Les particules de polymères MIP5/NIP5 et MIP6/NIP6 sont observés par microscopie électronique à balayage (MEB) (appareillage Gemini® Supra 40VP). La **Figure 4** représente à gauche des particules de polymère MIP5 (taille moyenne : 2,45 μm ; coefficient de variation : 25%) et à droite des particules de polymère NIP5 (taille moyenne : 1,7 μm ; coefficient de variation : 39%). La **Figure 5** représente à gauche des particules de polymère MIP6 (taille moyenne : 1,5 μm ; coefficient de variation : 26%) et à droite des particules de polymère NIP6 (taille moyenne : 1,8 μm ; coefficient de variation : 45%). Le coefficient de variation (CV) donne des informations sur la répartition des tailles des particules :

$$CV(\%) = (\text{écart-type} \times 100) / \text{taille moyenne (sur 100 particules)}$$

Les particules de polymères MIP sont plus sphériques et plus homogènes que celles des polymères NIP. La cible BaP favorise donc la précipitation des chaînes polymères en jouant sur les paramètres de solubilité du milieu. L'augmentation de la quantité de solvant apolaire (toluène) modifie également la morphologie de la surface des particules.

**Evaluation des propriétés des polymères à empreinte :**

*1) Propriétés d'adsorption des MIPs : isothermes d'adsorption*

*Principe :*

La capacité d'adsorption vis-à-vis de la molécule cible (BaP) par le polymère imprimé est évaluée par les isothermes d'adsorption. Cette méthode consiste à mettre en contact une quantité connue de polymère avec une solution contenant la molécule cible et à déterminer la quantité adsorbée par le polymère. La capacité d'adsorption (binding capacity, noté Q) est la quantité maximale de molécule cible adsorbée par le polymère (exprimée en mg de cible/g de résine polymère, ou en μmol/g). Cette valeur est à comparer à celle obtenue pour le polymère non-imprimé pour déterminer l'effet d'empreinte.

Le facteur d'empreinte est le rapport entre la capacité maximale d'adsorption du polymère imprimé et celle du non-imprimé.

*Partie expérimentale :*

10 mg de polymère sont introduits dans un flacon en verre de 30 mL. 10 mL de solution de BaP de concentration variant entre 0,1-20,0 $mg.L^{-1}$ sont ensuite ajoutés. La mise en contact se fait sous agitation orbitalaire à une vitesse de 200 rpm, pendant une durée de 24 heures. Le surnageant est filtré à travers un filtre PTFE 0,45 μm et analysé en UV-Vis pour déterminer la quantité de BaP adsorbée par le polymère. On trace la quantité adsorbée/gramme de polymère en fonction de la concentration d'équilibre (concentration du surnageant).

*Résultats :*

- *Isothermes d'adsorption dans le toluène (Figure 6)* :

Les courbes d'isothermes d'adsorption dans le toluène du polymère MIP5 synthétisé et du polymère NIP5 correspondant sont représentées à la Figure 6 sur laquelle $C_e$ représente la concentration en BaP à l'équilibre.
Il apparaît que :

- la capacité d'adsorption augmente fortement pour des concentrations faibles en BaP, puis atteint son maximum lorsque la concentration d'équilibre atteint environ 5 $mg.L^{-1}$ de BaP,
- la capacité maximale d'adsorption du polymère MIP5 est de 0,31 $\pm$ 0,01 $mg.g^{-1}$ et celle du polymère NIP5 de 0,08 $\pm$ 0,1 $mg.g^{-1}$ : les polymères à empreinte de l'invention présentent donc une capacité d'adsorption supérieure aux polymères non-imprimés,
- le facteur d'empreinte MIP5/NIP5 est de 3,9 : le polymère MIP5 adsorbe 3,9 fois plus de BaP que le polymère NIP5.

- *Isothermes d'adsorption dans un mélange eau/acétonitrile 99/1 (v/v) (Figure 7) :*

Les performances des polymères à empreinte de l'invention ont été évaluées dans un milieu proche du milieu d'application, *i.e.* l'eau. Etant donné que le BaP est peu soluble dans l'eau, l'étude est réalisée dans une solution eau/acétonitrile *99/1* (v/v).
Les résultats sont présentés à la Figure 7 sur laquelle $C_e$ représente la concentration en BaP à l'équilibre.
On observe que pour le polymère MIP5 de l'invention, l'adsorption augmente très rapidement pour les concentrations faibles et atteint le plateau à une concentration d'environ 1 $mg.L^{-1}$. La capacité maximale est de 6,5 $mg.g^{-1}$. Dans le cas du polymère NIP5, le plateau est atteint pour 3 $mg.L^{-1}$ avec une capacité de 3,2 $mg.g^{-1}$. D'où un facteur d'empreinte de 2,05.
La capacité maximale d'adsorption en milieu aqueux est par conséquent 20 fois supérieure à la capacité d'adsorption en milieu organique.

*2) Comparaison des performances des polymères à empreinte de l'invention par rapport aux polymères à empreinte décrits dans l'art antérieur*

Le Tableau 2 ci-après compare les résultats obtenus avec le polymère MIP5 de l'invention par rapport aux résultats présentés dans la littérature.
Le Tableau 2 compare les valeurs de capacité d'adsorption (Q) et de facteur empreinte en fonction de la technique de quantification de la cible, du milieu dans lequel a lieu l'expérience, des monomères utilisés et de la voie de polymérisation.

Tableau 2 : Comparaison des performances des polymères à empreinte de l'invention par rapport aux polymères à empreinte décrits dans l'art antérieur

| Référence bibliographique | Q | Facteur d'empreinte MIP/NIP | Technique de quantification de la cible (BaP) | Milieu | Polymère | Voie de polymérisation |
|---|---|---|---|---|---|---|
| MIP5 | 0,31 mg/g<br>6,5 mg/g | 3,9<br>2,0 | UV-Vis | Toluène<br>Eau/acétonitrile v/v | VFc-EDMA | précipitation |
| (1) | 5,8-16,3 µg/g | 2,0 | fluorimètre | dichlorométhane | 4VP-EDMA, 4VP-DVB, MAA-DVB, TFMAA-DVB | en masse |
| (2) | 1,93 mg/g | 2,4 | GCMS | dichlorométhane | 4VP-EDMA | en masse |
| (3) | 6,93 mg/g | 4,5 | GCMS | Eau/ACN 99/1 | MAA-EDMA | en masse |

(suite)

| Référence bibliographique | Q | Facteur d'empreinte MIP/NIP | Technique de quantification de la cible (BaP) | Milieu | Polymère | Voie de polymérisation |
|---|---|---|---|---|---|---|
| (4) | 0,7 mg/g | 6,0 | fluorimètre | acétonitrile | MAA-EDMA | Electro-polymérisation |
| (5) | 6 mg/g | 3,0 | GCMS | acétonitrile | MAA-EDMA | en masse |

(1) J. P. Lai et al., Analytica chimica acta, 2004, Vol. 522, N°2, 137-144,
(2) R. J. Krupadam et al., Analytical and Bioanalytical Chemistry, 2010, Vol. 397, N°7, 3097-3106,
(3) R. J. Krupadam et al., Environmental Science & Technology, 2009, Vol. 43, n°8, 2871-2877,
(4) R. J. Krupadam et al., Water research, 2010, Vol. 44, n°3, 681-688,
(5) R. J. Krupadam et al., Journal of Nanoscience and Nanotechnology, 2009, Vol. 9, 5441-5447.

L'effet d'empreinte du polymère MIP5 de l'invention est du même ordre de grandeur que ceux rapportés dans la littérature. La présence du monomère rédox ne perturbe donc pas la reconnaissance spécifique des particules de MIPs.

*3) Propriétés électrochimiques*

*Etudes électrochimiques par voltampérométrie à impulsion différentielle (DPV) :*

*Principe :*

En voltampérométrie à impulsion différentielle (DPV : differential pulse voltammetry), une rampe linéaire de potentiel de faible amplitude est imposée, pendant un temps court de typiquement 50 ms toutes les 150 à 200 ms. Le courant est mesuré juste avant l'application de chaque pulse et juste à la fin de chaque pulse durant une courte période (10-20 ms). Le signal enregistré est la différence de courant entre ces deux mesures en fonction du potentiel E conduisant à une courbe différentiel ayant l'allure d'un pic. Cette technique permet d'augmenter le rapport courant faradique/courant capacitif, et ainsi la sensibilité.

*Paramètres d'acquisition :*

- Potentiel initial : - 0,100 V
- Potentiel vertex : 0,000 V
- Potentiel final : 1,000 V
- Amplitude d'impulsion : 0,05 V
- Durée de l'impulsion : 50 ms
- Hauteur : 1 mV
- Période : 100 ms
- Vitesse de scan : 0,01 mV/s
- Nombre de points : environ 2100

*Préparation de l'électrode de travail :*

De la pâte de carbone est mélangée avec le polymère MIP5 ou le polymère NIP5 avec un rapport de 4:1 en masse. Le mélange est homogénéisé avec un peu de solvant (dichlorométhane). Lorsque le mélange est assez fluide, il est placé dans une électrode de travail creuse (électrode Metrohm), puis séché sous vide. Le surplus est enlevé par polissage de la surface de l'électrode.

*Electrodes utilisées pour les mesures* :

- Electrode de travail : électrode solide de surface 0,070 $cm^2$ (électrode pâte de carbone + polymère rapport 4/1 w/w),
- Electrode de référence : électrode au calomel saturé (KCl : 0,242 V),
- Contre-électrode : électrode de platine, diamètre 1 cm.

*Expériences réalisées :*

Une électrode contenant le mélange pâte de carbone/polymère MIP5 (ou polymère NIP5) est placée dans une cellule électrochimique contenant 5 mL d'une solution d'électrolyte (0,1 $mol.L^{-1}$ de tétrabutylammonium hexafluorophosphate dans l'acétonitrile). Le signal rédox du ferrocène est observé pour les deux types d'électrode de travail (polymère MIP5 et polymère NIP5) vers 0,43 V (Figures 5 et 6). Un délai normal de 4h30 est nécessaire pour obtenir une stabilisation de ce signal (durée d'équilibre entre l'électrode de travail et la solution). Après 4h30, la cible BaP est ajoutée directement dans la solution, puis des mesures sont effectuées à intervalles réguliers.

- Electrode pâte de carbone/polymère NIP5 (Figure 8) :

« NIP seul » représente le voltampérogramme du polymère NIP5 dans la pâte de carbone après 4h30 de stabilisation.
« NIP + BaP juste après ajout » représente le voltampérogramme enregistré immédiatement après ajout de la cible Bap.
« NIP + BaP après 0,5 heure » représente le voltampérogramme enregistré 30 minutes après l'ajout de la cible BaP.
Une première courbe est enregistrée environ 30 secondes après l'ajout de la cible BaP (courbe NIP + BaP juste après ajout), puis ensuite à intervalles réguliers jusqu'à 8 heures (courbe NIP + BaP après 0,5 heure enregistrée après 30 minutes). On n'observe pas de modification de l'allure du voltampérogramme du ferrocène dans le polymère NIP lors de la mise en présence de la cible Bap.

- Electrode pâte de carbone/polymère MIP5 (Figure 9) :

La même expérience est menée en introduisant le polymère MIP5 mélangé à de la pâte de carbone dans l'électrode. Le signal rédox du ferrocène est observé vers 0,43 V.
La courbe « MIP seul » représente le voltampérogramme du polymère MIP5 dans la pâte de carbone après 4h30 de stabilisation.
La courbe « MIP + BaP juste après ajout » représente le voltampérogramme enregistré immédiatement après ajout de la cible BaP.
Les courbes « MIP + BaP après 1,5 heure » à « MIP + BaP après 8 heures » représentent les voltampérogrammes enregistrés à intervalles réguliers.
On observe une variation immédiate de la réponse électrochimique en présence de BaP, et ce dès 30 secondes. La variation des voltampérogrammes observée entre les polymères MIP5 et NIP5 après ajout de la cible BaP est liée à l'effet d'empreinte, dans la mesure où les expériences ont été conduites selon le même protocole, sans qu'il n'y ait aucune intervention sur les électrodes, les branchements, le potentiostat avant ou après ajout de la cible BaP.

*4) Etude comparée des propriétés des polymères MIP5/NIP5 et MIP6/NIP6 par HPLC-UV*

Deux propriétés sont comparées : l'adsorption de la molécule cible et la sélectivité en présence de molécules interférentes.

*Propriétés d'adsorption :*

L'adsorption se fait par contact entre une quantité connue de polymère et une solution de concentration connue des cibles (le BaP seul dans le cas de l'étude d'adsorption et le BaP avec un autre HAP dans le cas de l'étude de sélectivité). Le mélange est agité par un agitateur orbitalaire à une vitesse de 250 rpm. Après un temps de contact de cinq heures, le surnageant est analysé par HPLC-UV pour déterminer la quantité de chaque espèce restante et la quantité adsorbée. Les huit HAPs utilisés dans cette étude sont représentés sur le Schéma 2.

Schéma 2 : HAP utilisés pour l'étude de sélectivité

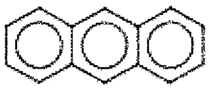

Anthracène

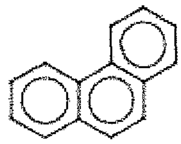

Phénanthrène

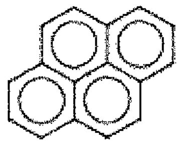

Pyrène

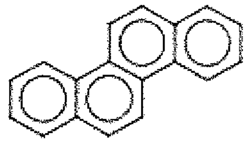

Chrysène

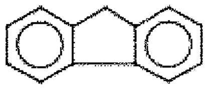

Fluorène

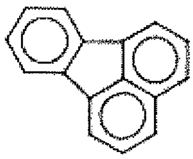

Fluoranthène

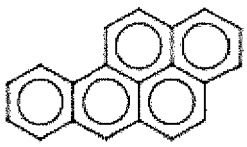

Benzo[a]Pyrène

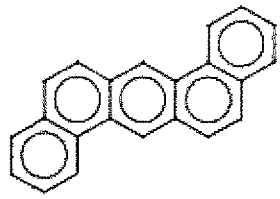

Dibenzo[a,h]Anthracène

Une élution isocratique (100% acétonitrile, temps d'analyse 15 minutes) est utilisée lorsque seul le BaP est présent. Le gradient d'élution utilisé pour l'étude de sélectivité est présenté au Tableau 3 avec un temps d'analyse d'une heure.

Tableau 3 : Gradients d'élution utilisés pour l'analyse des mélanges HAP

| Temps (min) | $H_2O$ (%) | ACN (%) |
|---|---|---|
| 0-10 | 45 | 55 |
| 10-35 | 0 | 100 |
| 35-55 | 0 | 100 |

Conditions d'analyse HPLC-UV :

- Colonne : Lichrospher®PAH (5 µm) (Merck KGaA)
- Détecteur : Hitachi L-2455 DAD
- Température du four : 30°C
- Volume d'injection : 50 µL
- Débit : 0,5 mL/min

Les huit HAPs sont introduits dans un mélange eau/acétonitrile 99/1 (v/v).

Cinétique d'adsorption :

Le polymère MIP6 est mis en contact avec une solution de BaP de concentration égale à 1,25 $mg.L^{-1}$ (soit 5 $\mu mol.L^{-1}$). Le surnageant est analysé au cours du temps de contact. L'adsorption est maximale et constante après un temps de contact de 4 heures environ (temps de référence) (**Figure 10**).

Isotherme d'adsorption :

L'augmentation de l'adsorption en fonction de la concentration en BaP est observée, suivie d'un plateau qui

correspond à la capacité d'adsorption (Q) (**Figure 11**). Le facteur d'empreinte (rapport entre la capacité d'adsorption du polymère imprimé et celle du non-imprimé) est également déterminé. Les résultats obtenus pour les polymères MIP5, MIP6, NIP5 et NIP6 sont récapitulées dans le Tableau 4.

Tableau 4 : Capacités d'adsorption et facteurs d'empreinte.

| | **Q ($mg.g^{-1}$)** | | **Q ($mg.g^{-1}$)** | **Facteur d'empreinte** |
|---|---|---|---|---|
| MIP5 | 3,30 | NIP5 | 2,50 | 1,32 |
| MIP6 | 3,70 | NIP6 | 2,28 | 1,62 |

Les valeurs de capacité d'adsorption (Q) connues de l'art antérieur sont comprises entre 5,8 $\mu g.g^{-1}$ et 7 $mg.g^{-1}$ (R. J. Krupadam et al., Sensors and Actuators B : Chemical, 2007, Vol. 26, p. 444-451 ; F. L. Dickert et al., Anal. Chem., 1999, Vol. 71, p. 4559-4563; L. H. Wei et al., Journal of Environmental Science and Health, Part. A, 2010, Vol. 45, p. 211-223; J. P. Lai et al., Analytica chimica acta, 2004, Vol. 522, n°2, 137-144 ; R. J. Krupadam et al., Water research, 2010, Vol. 44, n°3, 681-688). La comparaison des capacités d'adsorption montrent que les MIPs de l'invention présentent de bonnes propriétés de reconnaissance du BaP.

Modèles des isothermes d'adsorption :

Les isothermes précédemment établis peuvent être modélisés pour interpréter les phénomènes d'adsorption (E. Corton et al., Journal of Non-Crystalline Solids, 2007, Vol. 353, n°8-10, p. 974-980 ; G. Limousin et al., Applied Geochemistry, 2007, Vol. 22, n°2, p. 249-275). Pour une adsorption homogène, les paramètres d'adsorption peuvent être estimés de façon directe. Dans le cas d'une adsorption inhomogène, l'estimation est basée sur la généralisation des contributions de l'adsorption de haute affinité à faibles concentrations et celles de l'adsorption de faible affinité à hautes concentrations. Dans un premier temps, deux modèles sont étudiés : Langmuir simple et Freundlich,

✓ *Modèle Langmuir simple*

Ce modèle se base sur les cinq hypothèses suivantes :

- la capacité d'adsorption peut avoir une valeur maximale ($Q_{max}$),
- tous les sites sont équivalents,
- chaque site est occupé par une seule molécule,
- l'énergie et l'encombrement stérique ne sont pas dépendants de la quantité adsorbée, et
- le coefficient d'activité de surface est égal à 1 (adsorption homogène).

Considérant Q = quantité adsorbée (ou capacité d'adsorption) et C = quantité libre (ou concentration d'équilibre), après une linéarisation :

$$\frac{1}{Q}=\frac{1}{Qe\,K_0\,C}+\frac{1}{Qe}$$

avec :

- $K_0$ = coefficient d'affinité d'adsorption, et
- Qe = capacité d'adsorption à l'équilibre.

✓ *Modèle de Freundlich*

Ce modèle se base sur une fonction empirique pour une adsorption multicouche non-idéale sur une surface hétérogène :

$$Q = aC^{m}$$

$$\text{Log } Q = \log a + m \log C$$

avec :

- a = coefficient d'adsorption de Freundlich, et
- m = indice d'hétérogénéité ($0 \leq m \leq 1$).

Après application des deux modèles sur les valeurs expérimentales obtenues, les coefficients de corrélation et les constantes d'équilibre sont déterminés et récapitulés dans le Tableau 5.

Tableau 5 : Récapitulatif des constantes de corrélation ($R^2$) et constantes d'équilibre d'isotherme de *Langmuir* ($K_L$) et de *Freundlich* ($K_F$) des différents polymères

| | $R^2$ Langmuir | $K_L$ ($L.mg^{-1}$ BaP) | Qe ($mg.g^{-1}$) | Q ($mg.g^{-1}$) expérimentale | $R^2$ Freundlich | $K_F$ ($L.mg^{-1}$ BaP) |
|---|---|---|---|---|---|---|
| **MIP5** | 0,9433 | 0,3957 | 4,523 | 3,30 | 0,9625 | 1,266 |
| **NIP5** | 0,9951 | 0,5568 | 1,477 | 2,50 | 0,9178 | 0,457 |
| **MIP6** | 0,9974 | 1,0571 | 2,359 | 3,70 | 0,9686 | 1,501 |
| **NIP6** | 0,9896 | 0,6518 | 0,914 | 2,28 | 0,9367 | 0,387 |

A l'exception du MIP5, les polymères présentent un comportement d'adsorption plus proche du modèle de Langmuir. Cependant, les valeurs de Qe sont éloignées des valeurs expérimentales d'où la nécessité d'appliquer d'autres modèles (Langmuir-Freundlich par exemple) pour mieux se rapprocher des valeurs expérimentales (obtenir un meilleur coefficient de corrélation).

*Sélectivité :*

La mesure de sélectivité est réalisée en mettant en contact le polymère avec une solution contenant du BaP et un autre HAP à une concentration d'environ 0,45 $\mu mol.L^{-1}$ de chacune des espèces, et les capacités d'adsorption déterminées.

Différents coefficients sont déterminés à partir des résultats d'adsorption pour chaque espèce. Les résultats sont récapitulés dans les Tableaux 6 et 7.

Le coefficient de distribution ($K_d$) est le rapport entre la capacité d'adsorption à une concentration d'équilibre sur cette concentration d'équilibre ($C_e$) :

$$K_d = \frac{Q_e}{C_e}$$

Le coefficient de sélectivité (k) est le rapport entre le coefficient de distribution de la cible sur celui de la molécule interférente :

$$k = \frac{K_d\, BaP}{K_d\, HAP}$$

Le coefficient de sélectivité relative k' est le rapport entre k du MIP et k du NIP :

$$k' = \frac{k_{\text{MIP}}}{k_{\text{NIP}}}$$

Tableau 6 : Capacités d'adsorption et facteurs d'empreinte pour chaque espèce HAP

| | Capacité d'adsorpion, Q ($\mu$mol.g$^{-1}$) | | | Capacité d'adsorpion, Q ($\mu$mol.g$^{-1}$) | | |
|---|---|---|---|---|---|---|
| | MIP80/20 | NIP80/20 | IF | MIP70/30 | NIP70/30 | IF |
| Fluorène | 0,23 | 0,18 | 1,28 | 0,24 | 0,13 | 1,85 |
| Phénanthrène | 0,12 | 0,12 | 1,00 | 0,19 | 0,11 | 1,73 |
| Anthracène | 0,30 | 0,23 | 1,30 | 0,19 | 0,12 | 1,58 |
| Fluoranthène | 0,21 | 0,2 | 1,05 | 0,23 | 0,13 | 1,77 |
| Pyrène | 0,25 | 0,24 | 1,04 | 0,3 | 0,12 | 2,50 |
| Chrysène | 0,23 | 0,18 | 1,28 | 0,28 | 0,16 | 1,75 |
| Benzo(a)pyrène (BaP) * | 0,20 | 0,14 | 1,39 | 0,19 | 0,09 | 2,11 |
| Dibenzo (a,h) | 0,01 | 0,01 | 1,00 | 0,01 | 0,01 | 1,00 |
| * Valeur moyenne | | | | | | |

Tableau 7 : Coefficients de sélectivité (k) et coefficients de sélectivité relative avec des données de la littérature

| | **k** | **k** | **k'** | **k** | **k** | **k'** | **k'*** |
|---|---|---|---|---|---|---|---|
| | **MIP5** | **NIP5** | **-** | **MIP6** | **NIP6** | | **4VP-co-EDMA** |
| **Fluorène** | 0,560 | 0,580 | 0,97 | 0,658 | 0,639 | 1,03 | NA |
| **Phénanthrène** | 2,862 | 1,590 | 1,80 | 2,310 | 1,422 | 1,62 | NA |
| **Anthracène** | 0,449 | 0,375 | 1,20 | 1,605 | 0,401 | 4,01 | 1,19 |
| **Fluoranthène** | 0,722 | 0,553 | 1,31 | 0,802 | 0,433 | 1,85 | NA |
| **Pyrène** | 0,552 | 0,483 | 1,14 | 0,402 | 0,659 | 0,61 | 1,39 |
| **Chrysène** | 0,624 | 0,580 | 1,08 | 0,567 | 0,574 | 0,99 | 1,27 |
| * Données de la littérature : J. P. Lai et al., Analytica chimica acta, 2004, Vol. 522, n°2, 137-144 | | | | | | | |

De façon générale, les facteurs d'empreintes sont supérieurs à 1. Ceci montre une meilleure capacité d'adsorption des HAPs pour les MIPs. Les coefficients de sélectivité relative (k') sont proches de 1.

*Propriétés électrochimigues :*

Pour évaluer les propriétés électrochimiques des polymères à empreinte, les particules de polymère MIP6 et NIP6 sont mélangées avec une matrice conductrice (pâte de carbone) puis l'ensemble est mis dans une électrode de travail creuse de 5 mm de diamètre. La technique utilisée est la voltampérométrie à onde carrée (Square WaveVoltammetry : SWV). L'électrode est tout d'abord séchée sous vide puis l'analyse est effectuée en milieu organique (acétonitrile/tétrabutylammonium hexafluorophosphate ou $TBAPF_6$ 0,1 M), Un voltampérogramme est enregistré régulièrement sur une période de 2 heures, jusqu'à ce que le signal soit stabilisé, puis une solution de BaP est ajoutée de façon à saturer le polymère. L'enregistrement est réalisé sur une période de 22 heures. La solution est agitée en permanence en moyen d'un barreau aimanté. L'agitation est arrêtée 1 minute 30 avant chaque mesure. Les résultats obtenus pour les polymères MIP6 et NIP6 sont présentés aux Figures 9 et 10.

*Instrumentation :*

Potentiostat : Potentiostat/Galvanostat Model 273A (EG&G Princeton Applied Research)

*Paramètres expérimentaux :*

- quilibration à 0,000 V pendant 30 s
- Potentiel initial : 0,000 V
- Potentiel vertex : 1,000 V
- Amplitude d'impulsion : 0,15 V
- Durée de l'impulsion : 50 ms
- Hauteur : 2 mV
- Période : 100 ms
- Vitesse de scan : 20 mV/s

Dans le cas du NIP6, une légère baisse d'intensité est observée 22 heures après l'ajout de BaP mais l'effet est moins important que pour le MIP. Pour ce dernier un déplacement en potentiel d'oxydation et une baisse d'intensité 4 heures après l'ajout de BaP sont observés.

## Revendications

1. Polymère à empreinte non conducteur d'électricité obtenu par polymérisation d'au moins un monomère avec au moins un agent réticulant en présence d'une cible, ledit polymère présentant dans sa structure au moins une cavité ayant la forme de ladite cible, **caractérisé en ce qu'**il comprend dans sa structure au moins une sonde rédox se présentant sous forme polymérisable, le polymère à empreinte ne comprenant pas de moyen de transmission, notamment par électrochimie ou fluorescence, autre que la sonde redox présente dans la structure du polymère.

2. Polymère à empreinte selon la revendication 1 dans lequel la sonde rédox présente au moins un site polymérisable, le monomère étant dans ce cas la sonde rédox.

3. Polymère à empreinte selon la revendication 2 dans lequel le monomère est un monomère rédox porteur d'au moins une fonction de type ferrocène ayant un site polymérisable, ledit site polymérisable étant de préférence choisi parmi les sites vinylique, (méth)acrylique ou allylique, ledit monomère rédox étant encore plus préférentiellement le vinylferrocène.

4. Polymère à empreinte selon la revendication 1 dans lequel la sonde rédox présente au moins deux sites polymérisables et joue le rôle d'agent réticulant, l'agent réticulant étant de préférence un monomère (méth)acrylique, vinylique, styrénique ou allylique, choisi parmi les groupes di, tri ou tétra-fonctionnels.

5. Polymère à empreinte selon l'une des revendications 1 à 4 dans lequel la sonde rédox se situe à proximité de la cavité ayant la forme d'une cible.

6. Polymère à empreinte selon l'une des revendications 1 à 5 dans lequel la cible est une molécule ou un ion.

7. Polymère à empreinte selon la revendication 6 dans lequel la cible est une molécule choisie parmi les hydrocarbures aromatiques polycycliques (HAPs), les stéroïdes, les principes actifs, les pesticides, les herbicides, les tensioactifs, les colorants alimentaires, les molécules biologiquement actives.

8. Polymère à empreinte selon la revendication 6 dans lequel la cible est un ion, ledit polymère pouvant également comprendre dans sa structure au moins un ligand se présentant soit sous forme polymérisable, soit sous forme non polymérisable.

9. Polymère à empreinte selon l'une des revendications 1 à 8 dans lequel la distance minimale entre la sonde rédox et la cavité ayant la forme d'une cible est la distance à laquelle la sonde rédox interagit avec la cible et émet un signal de détection, la sonde rédox se situant de préférence dans la cavité ayant la forme d'une cible.

10. Procédé de préparation d'un polymère à empreinte selon l'une des revendications 1 à 9 **caractérisé en ce qu'**il comprend les étapes suivantes :

(i) la polymérisation d'un monomère avec un agent réticulant en présence d'une cible et d'une sonde rédox se présentant sous forme polymérisable, et
(ii) l'élimination de la cible présente au sein du polymère obtenu à l'issu de l'étape (i).

**11.** Procédé selon la revendication 10 dans lequel la sonde rédox présente au moins un site polymérisable, le monomère étant dans ce cas la sonde rédox.

**12.** Procédé selon la revendication 10 dans lequel la sonde rédox présente au moins deux sites polymérisables, l'agent réticulant étant dans ce cas la sonde rédox.

**13.** Procédé de détection d'une cible **caractérisé en ce qu'**il comprend au moins les étapes suivantes :

(i') la mise en contact d'un échantillon comprenant une cible avec un polymère à empreinte tel que défini selon l'une des revendications 1 à 9, et
(ii') la détection de la cible, de préférence par mesure électrique ou par une méthode électrochimique telles que la chronopotentiométrie, la chronoampérométrie, la voltampérométrie.

**14.** Utilisation d'un polymère à empreinte tel que défini selon l'une des revendications 1 à 9 comme capteur.

**15.** Utilisation d'un polymère à empreinte tel que défini selon l'une des revendications 1 à 9 comme interface active pour la fabrication de (bio)capteurs ou de supports d'extraction en phase solide.

**16.** Dispositif incluant au moins un polymère à empreinte tel que défini selon l'une des revendications 1 à 9, ledit dispositif étant de préférence un capteur électrochimique ou une colonne d'extraction.

## Patentansprüche

**1.** Elektrisch nicht leitendes geprägtes Polymer, erhalten durch Polymerisation von mindestens einem Monomer mit mindestens einem Vernetzungsmittel in Gegenwart eines Targets, wobei das Polymer in seiner Struktur mindestens einen Hohlraum aufweist, der die Form des Targets vorweist, **dadurch gekennzeichnet, dass** es in seiner Struktur mindestens eine Redoxsonde umfasst, die in polymerisierbarer Form vorliegt, wobei das geprägte Polymer kein Transmissionsmittel, insbesondere durch Elektrochemie oder Fluoreszenz, umfasst, außer der in der Struktur des Polymers vorliegenden Redoxsonde.

**2.** Geprägtes Polymer nach Anspruch 1, wobei die Redoxsonde mindestens eine polymerisierbare Stelle aufweist, wobei in diesem Fall das Monomer die Redoxsonde ist.

**3.** Geprägtes Polymer nach Anspruch 2, wobei das Monomer ein Redox-Monomer ist, das mindestens eine Funktion der Ferrocen-Art trägt, die eine polymerisierbare Stelle vorweist, wobei die polymerisierbare Stelle vorzugsweise ausgewählt ist aus vinylischen, (meth)acrylischen oder allylischen Stellen, wobei das Redox-Monomer noch stärker bevorzugt Vinylferrocen ist.

**4.** Geprägtes Polymer nach Anspruch 1, wobei die Redoxsonde mindestens zwei polymerisierbare Stellen aufweist und die Rolle des Vernetzungsmittels spielt, wobei das Vernetzungsmittel vorzugsweise ein (meth)acrylisches, vinylisches, styrolisches oder allylisches Monomer ist, ausgewählt aus di-, tri- oder tetrafunktionellen Gruppen.

**5.** Geprägtes Polymer nach einem der Ansprüche 1 bis 4, wobei die Redoxsonde sich in der Nähe des Hohlraums, der die Form eines Targets vorweist, befindet.

**6.** Geprägtes Polymer nach einem der Ansprüche 1 bis 5, wobei das Target ein Molekül oder ein Ion ist.

**7.** Geprägtes Polymer nach Anspruch 6, wobei das Target ein Molekül ist, ausgewählt aus den polycyclischen aromatischen Kohlenwasserstoffen (PAKs), Steroiden, Wirkstoffen, Pestiziden, Herbiziden, Tensiden, Nahrungsmittelfarbstoffen, biologisch aktiven Molekülen.

**8.** Geprägtes Polymer nach Anspruch 6, wobei das Target ein Ion ist, wobei das Polymer in seiner Struktur ebenfalls mindestens einen Liganden umfassen kann, entweder in polymerisierbarer Form oder in nichtpolymerisierbarer

Form vorliegend.

**9.** Geprägtes Polymer nach einem der Ansprüche 1 bis 8, wobei der minimale Abstand zwischen der Redoxsonde und dem Hohlraum, der die Form eines Targets vorweist, der Abstand ist, bei dem die Redoxsonde mit dem Target wechselwirkt und ein Detektionssignal emittiert, wobei die Redoxsonde sich vorzugsweise in dem Hohlraum, der die Form eines Targets vorweist, befindet.

**10.** Zubereitungsverfahren eines geprägten Polymers nach einem der Ansprüche 1 bis 9, **dadurch gekennzeichnet, dass** es die folgenden Schritte umfasst:

(i) die Polymerisation eines Monomers mit einem Vernetzungsmittel in Gegenwart eines Targets und einer Redoxsonde, die in polymerisierbarer Form vorliegt, und
(ii) die Eliminierung des Targets, das innerhalb des Polymers vorliegt, das am Ende des Schritts (i) erhalten wird.

**11.** Verfahren nach Anspruch 10, wobei die Redoxsonde mindestens eine polymerisierbare Stelle vorweist, wobei in diesem Fall das Monomer die Redoxsonde ist.

**12.** Verfahren nach Anspruch 10, wobei die Redoxsonde mindestens zwei polymerisierbare Stellen vorweist, wobei in diesem Fall das Vernetzungsmittel die Redoxsonde ist.

**13.** Detektionsverfahren eines Targets, **dadurch gekennzeichnet, dass** es mindestens die folgenden Schritte umfasst:

(i') das In-Kontakt-Bringen einer Probe, umfassend ein Target, mit einem geprägten Polymer wie nach einem der Ansprüche 1 bis 9 definiert, und
(ii') die Detektion des Targets, vorzugsweise durch elektrische Messung oder durch ein elektrochemisches Verfahren wie Chronopotentiometrie, Chronoamperometrie, Voltammetrie.

**14.** Verwendung eines geprägten Polymers wie nach einem der Ansprüche 1 bis 9 definiert als Sensor.

**15.** Verwendung eines geprägten Polymers wie nach einem der Ansprüche 1 bis 9 definiert als aktive Schnittstelle zur Fertigung von (Bio)Sensoren oder von Festphasenextraktionsträgern.

**16.** Vorrichtung, einschließend mindestens ein geprägtes Polymer wie nach einem der Ansprüche 1 bis 9 definiert, wobei die Vorrichtung vorzugsweise ein elektrochemischer Sensor oder eine Extraktionssäule ist.

## Claims

**1.** Non-electrically conductive imprinted polymer that is obtained by polymerisation of at least one monomer with at least one crosslinking agent in the presence of a target, said polymer having in the structure thereof, at least one cavity having the shape of said target, **characterised in that** it comprises, in the structure thereof, at least one redox probe having a polymerisable form, the imprinted polymer not comprising any means of transmission, in particular by electrochemistry or fluorescence, other than the redox probe present in the structure of the polymer.

**2.** Imprinted polymer according to claim 1, wherein the redox probe has at least one polymerisable site, the monomer being, in this case, the redox probe.

**3.** Imprinted polymer according to claim 2, wherein the monomer is a redox monomer carrying at least one function of the ferrocene type that has a polymerisable site, said polymerisable site being preferably selected from vinyl, (meth)acrylic or allyl sites, said redox monomer being even more preferably vinylferrocene.

**4.** Imprinted polymer according to claim 1, wherein the redox probe has at least two polymerisable sites and acts as a crosslinking agent, with the crosslinking agent preferably being a (meth)acrylic, vinyl, styrene or allyl monomer, selected from di, tri or tetra-functional groups.

**5.** Imprinted polymer according to one of claims 1 to 4, wherein the redox probe is located in the proximity of the cavity that has the shape of a target.

**6.** Imprinted polymer according to one of claims 1 to 5, wherein the target is a molecule or an ion.

**7.** Imprinted polymer according to claim 6, wherein the target is a molecule selected from polycyclic aromatic hydrocarbons (PAHs), steroids, active ingredients, pesticides, herbicides, surfactants, food colourings, biologically active molecules.

**8.** Imprinted polymer according to claim 6, wherein the target is an ion, said polymer also possibly comprising, in the structure thereof, at least one ligand having either a polymerisable form or a non-polymerisable form.

**9.** Imprinted polymer according to one of claims 1 to 8, wherein the minimum distance between the redox probe and the cavity that has the shape of a target is the distance at which the redox probe interacts with the target and emits a detection signal, the redox probe being preferably located in the cavity that has the shape of a target.

**10.** Method for preparing an imprinted polymer according to one of claims 1 to 9, **characterised in that** it comprises the following steps:

(i) the polymerisation of a monomer with a crosslinking agent in the presence of a target and a redox probe having a polymerisable form, and
(ii) the removal of the target present within the polymer obtained at the end of step (i).

**11.** Method according to claim 10, wherein the redox probe has at least one polymerisable site, with the monomer being, in this case, the redox probe.

**12.** Method according to claim 10, wherein the redox probe has at least two polymerisable sites, with the crosslinking agent being, in this case, the redox probe.

**13.** Method for detecting a target, **characterised in that** it comprises at least the following steps:

(i’) the putting into contact of a sample comprising a target with an imprinted polymer such as defined according to one of claims 1 to 9, and
(ii’) the detecting of the target, preferably by electrical measurement or by an electrochemical method such as chronopotentiometry, chronoamperometry, voltamperommetry.

**14.** Use of an imprinted polymer such as defined according to one of claims 1 to 9 as a sensor.

**15.** Use of an imprinted polymer such as defined according to one of claims 1 to 9 as an active interface for the manufacture of (bio)sensors or solid phase extraction substrates.

**16.** Device including at least one imprinted polymer such as defined according to one of claims 1 to 9, said device being preferably an electrochemical sensor or an extraction column.

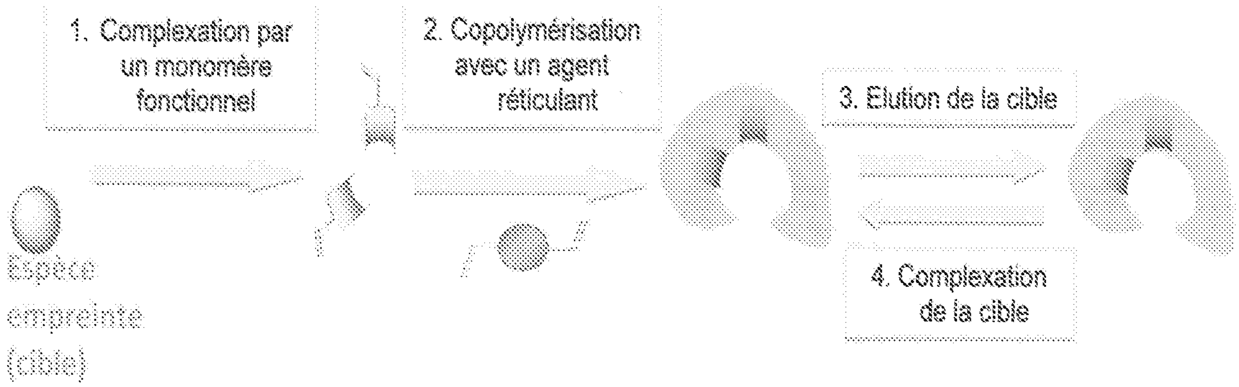
1. Complexation par un monomère fonctionnel
2. Copolymérisation avec un agent réticulant
3. Elution de la cible
4. Complexation de la cible
Espèce empreinte (cible)

FIGURE 1

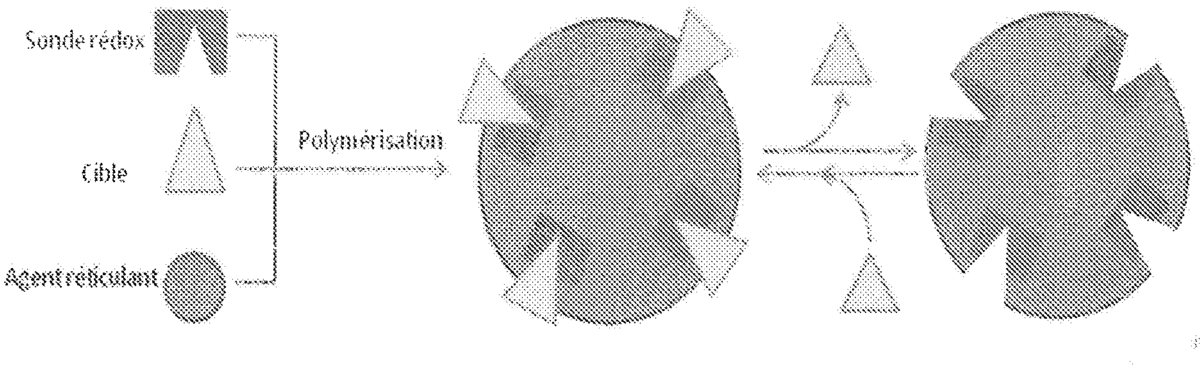


FIGURE 2

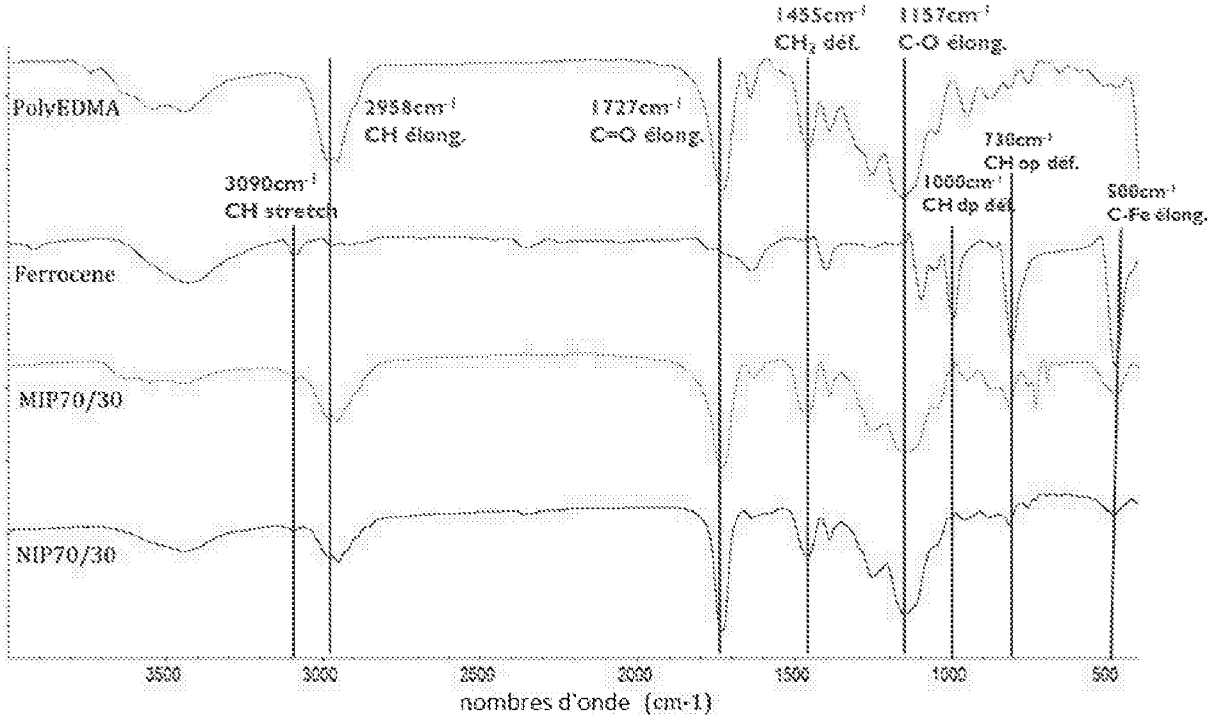
1455cm-1
CH2 déf.
1157cm-1
C-O élong.
PolyEDMA
2958cm-1
CH élong.
1727cm-1
C=O élong.
730cm-1
CH op déf.
3090cm-1
CH stretch
1000cm-1
CH dp déf.
580cm-1
C-Fe élong.
Ferrocene
MIP70/30
NIP70/30
3500
3000
2500
2000
1500
1000
500
nombres d'onde (cm-1)

FIGURE 3

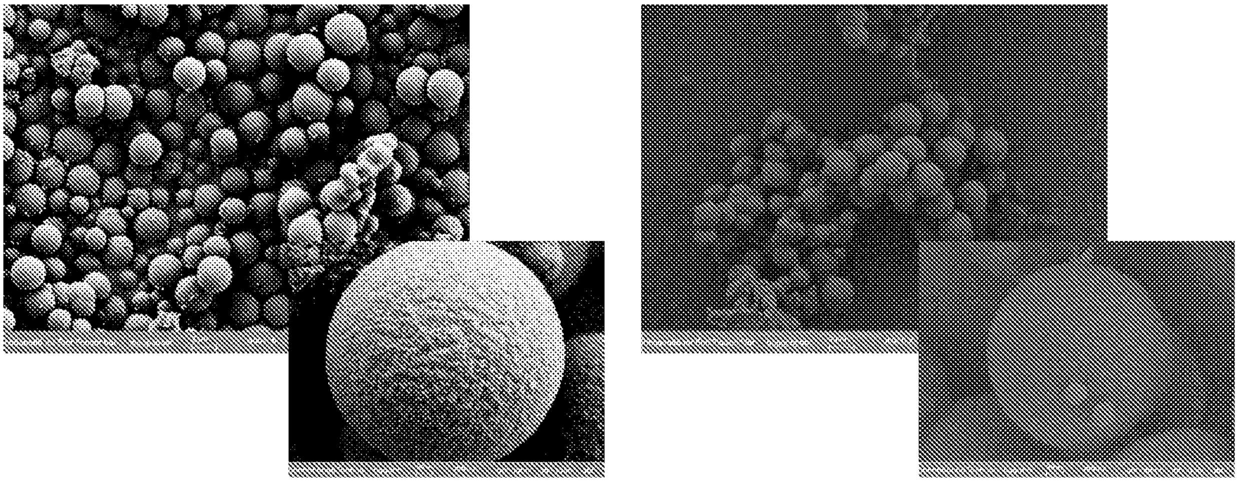

MIP5 NIP5

FIGURE 4

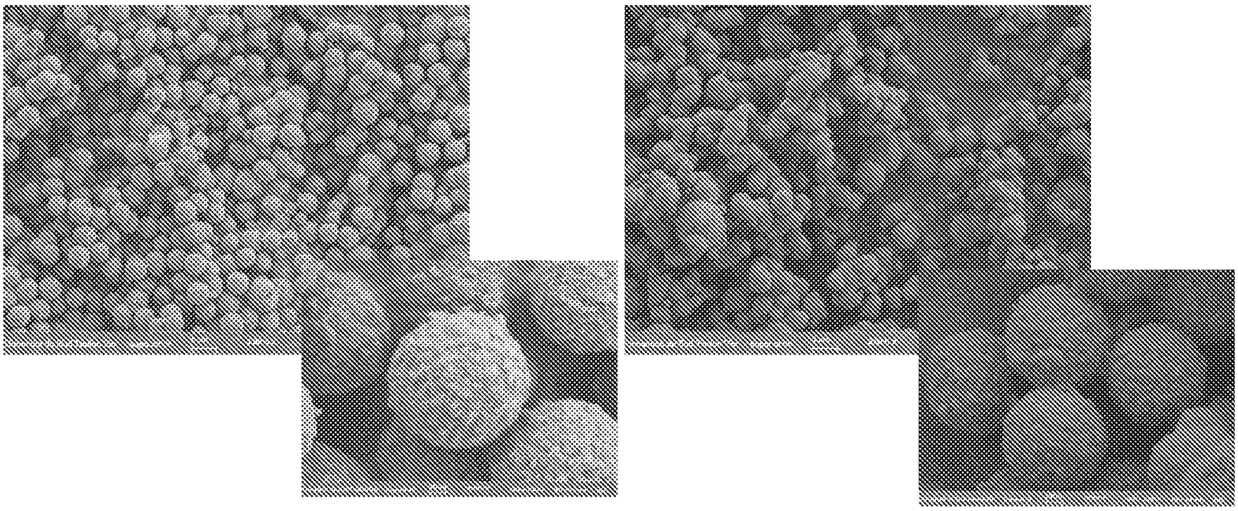

MIP6 NIP6

FIGURE 5

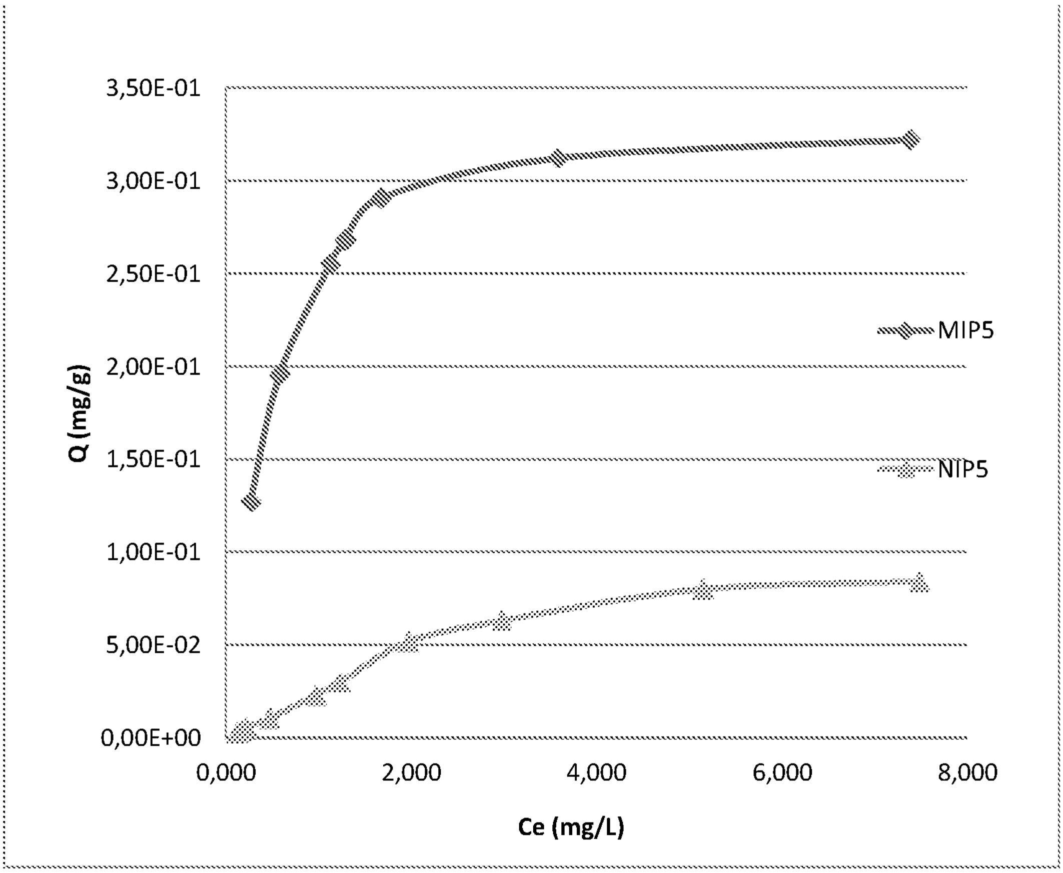
3,50E-01
3,00E-01
2,50E-01
2,00E-01
1,50E-01
1,00E-01
5,00E-02
0,00E+00
Q (mg/g)
0,000
2,000
4,000
6,000
8,000
Ce (mg/L)
MIP5
NIP5

FIGURE 6

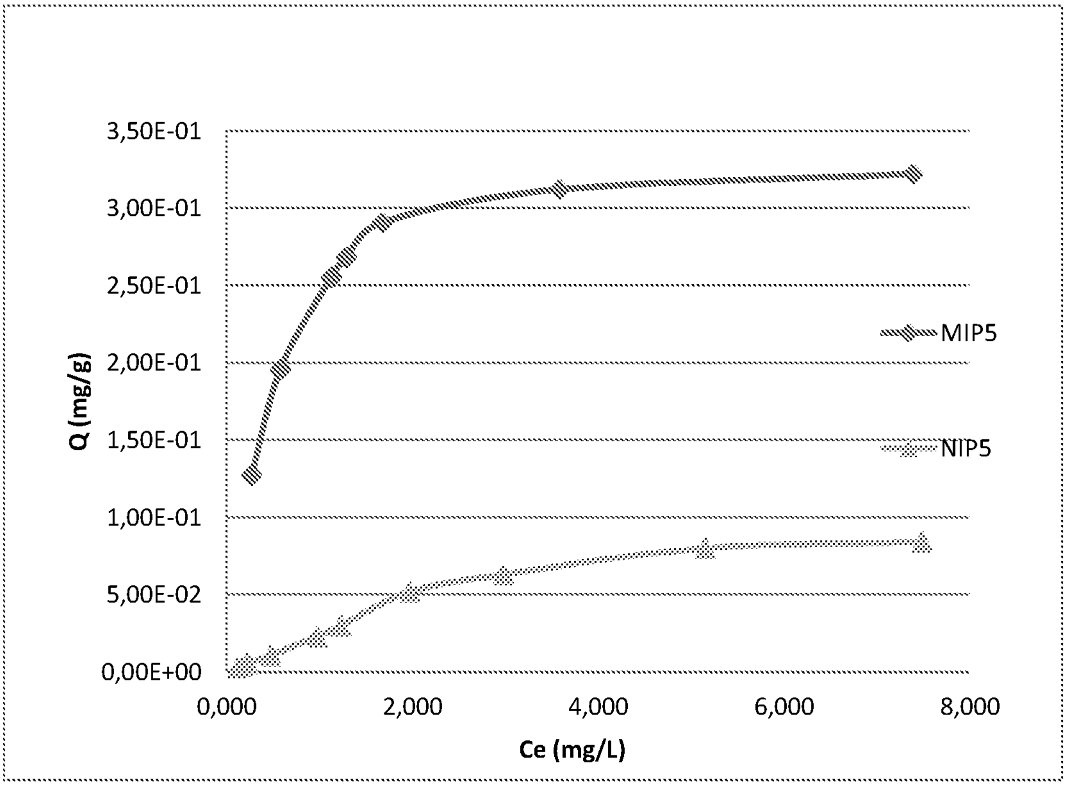
3,50E-01
3,00E-01
2,50E-01
2,00E-01
1,50E-01
1,00E-01
5,00E-02
0,00E+00
Q (mg/g)
0,000
2,000
4,000
6,000
8,000
Ce (mg/L)
MIP5
NIP5

FIGURE 7

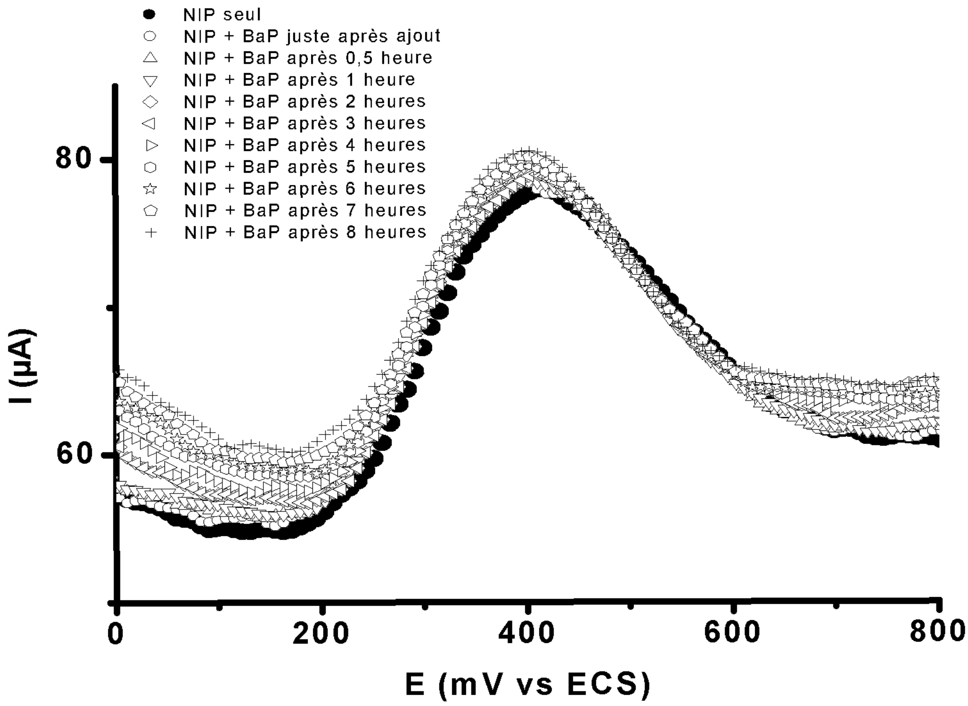
NIP seul
NIP + BaP juste après ajout
NIP + BaP après 0,5 heure
NIP + BaP après 1 heure
NIP + BaP après 2 heures
NIP + BaP après 3 heures
NIP + BaP après 4 heures
NIP + BaP après 5 heures
NIP + BaP après 6 heures
NIP + BaP après 7 heures
NIP + BaP après 8 heures
80
60
I (µA)
0
200
400
600
800
E (mV vs ECS)

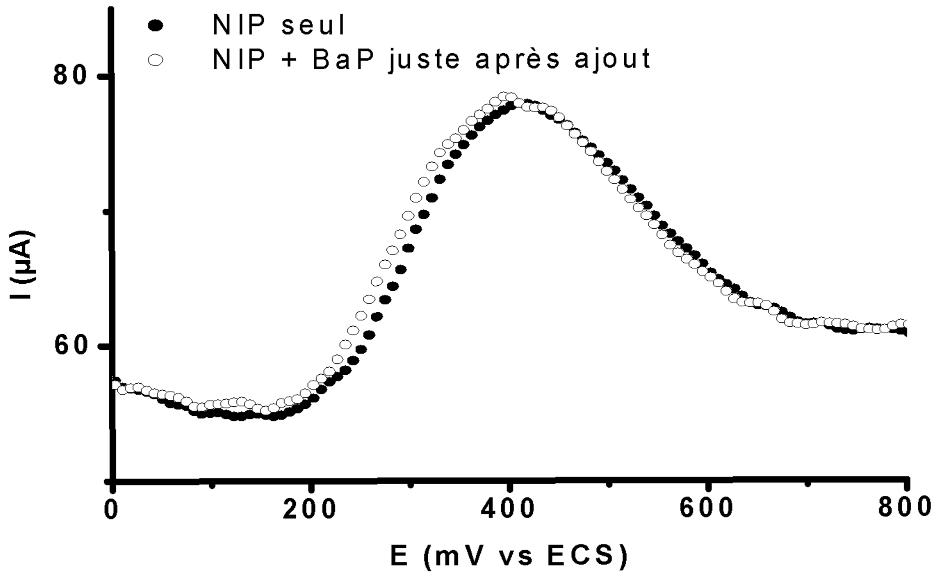
NIP seul
NIP + BaP juste après ajout
80
60
I (µA)
0
200
400
600
800
E (mV vs ECS)

FIGURE 8

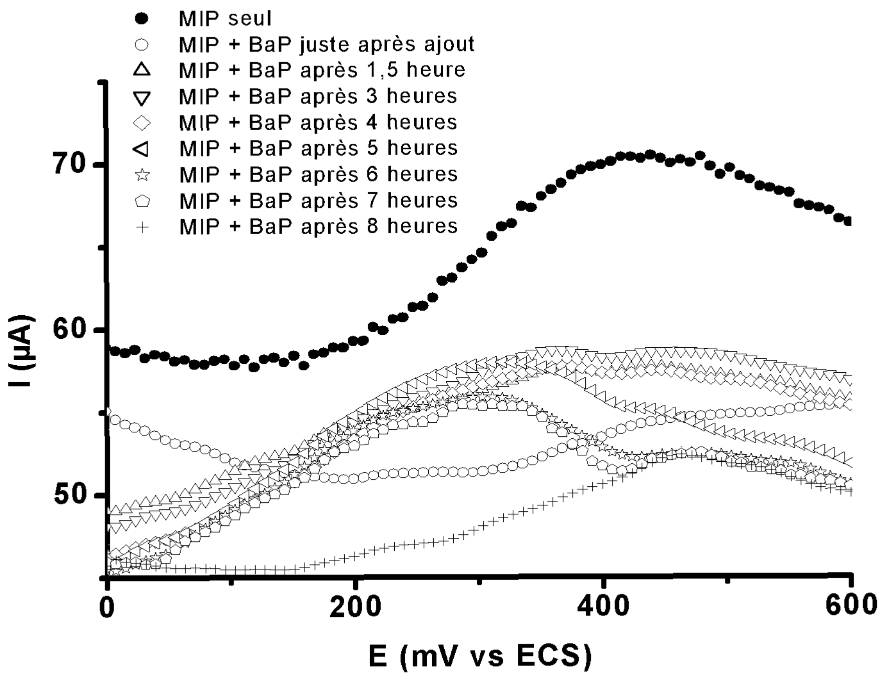
MIP seul
MIP + BaP juste après ajout
MIP + BaP après 1,5 heure
MIP + BaP après 3 heures
MIP + BaP après 4 heures
MIP + BaP après 5 heures
MIP + BaP après 6 heures
MIP + BaP après 7 heures
MIP + BaP après 8 heures
70
60
50
I (µA)
0
200
400
600
E (mV vs ECS)

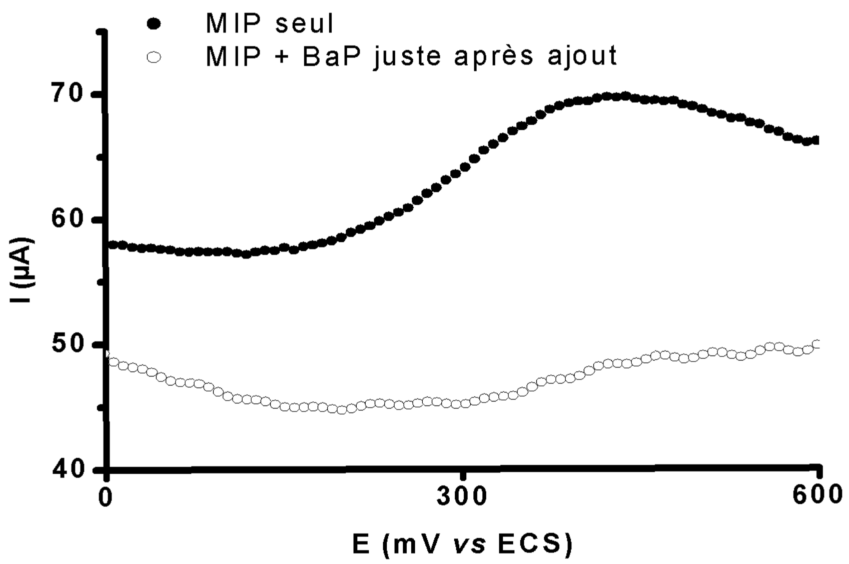
MIP seul
MIP + BaP juste après ajout
70
60
50
40
I (µA)
0
300
600
E (mV vs ECS)

FIGURE 9

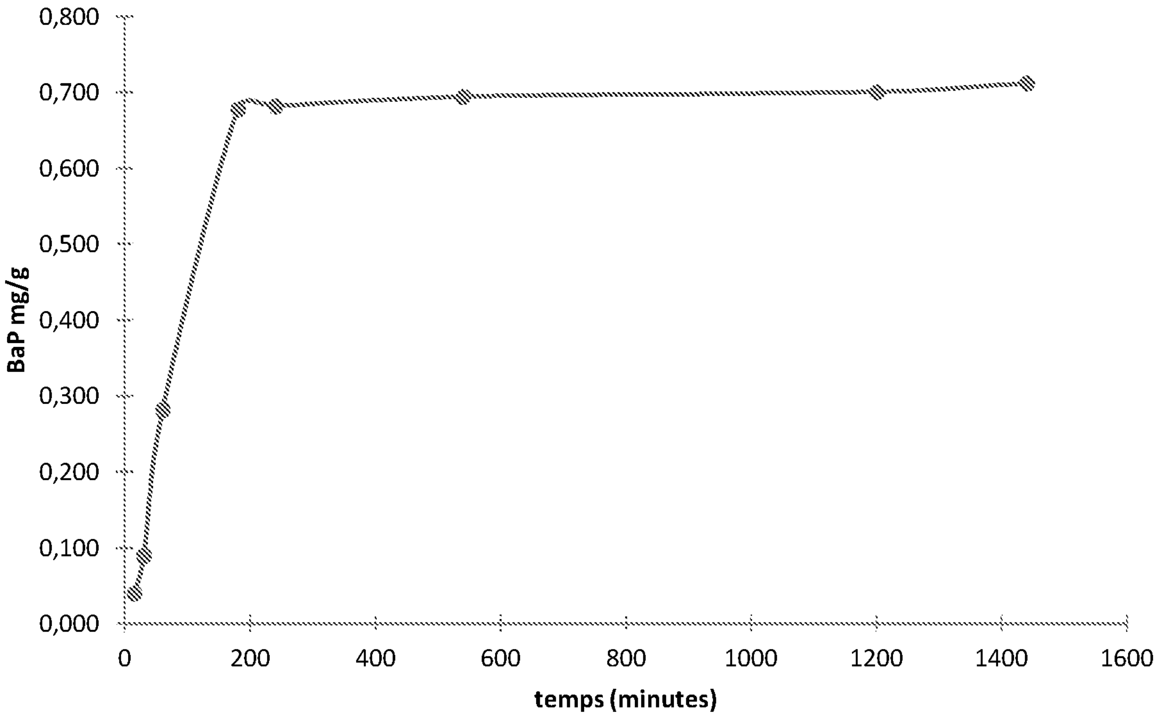


FIGURE 10

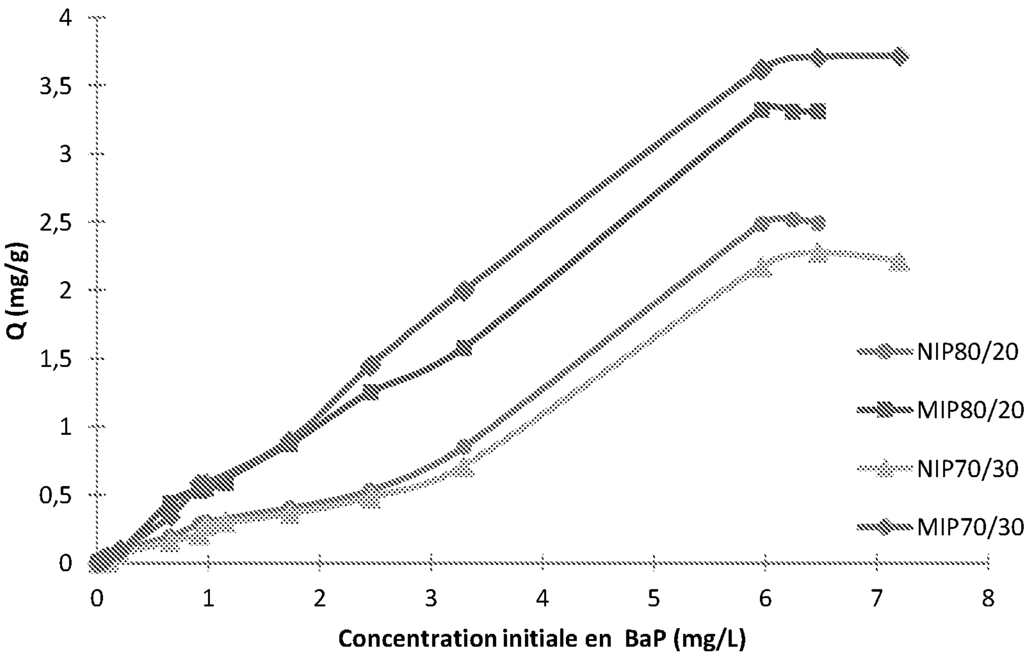


FIGURE 11

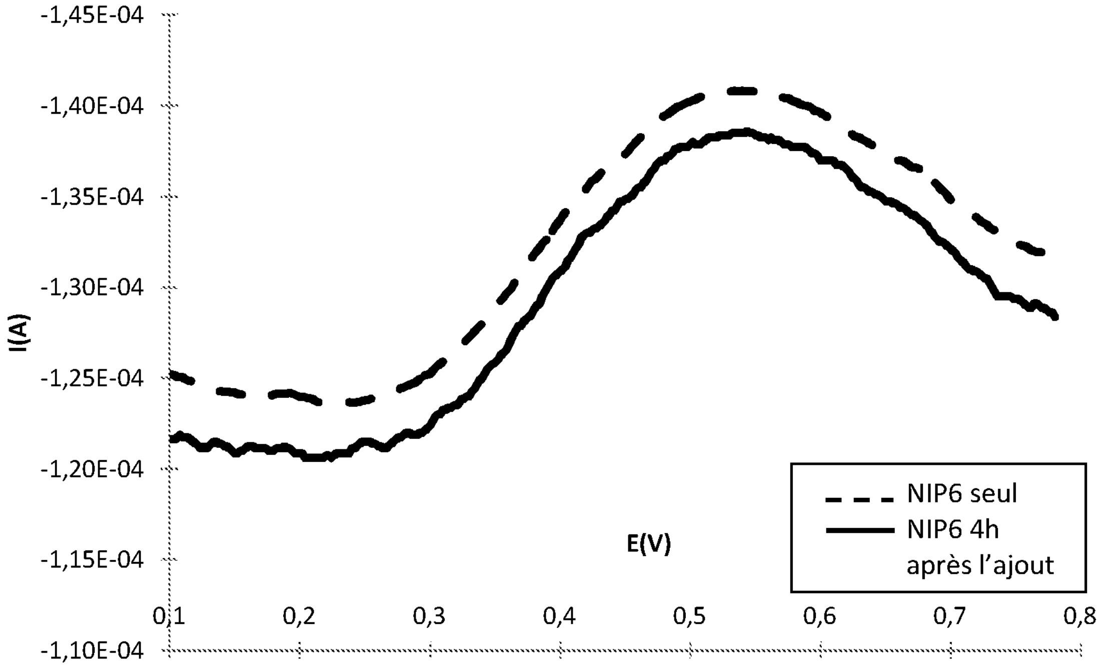


FIGURE 12

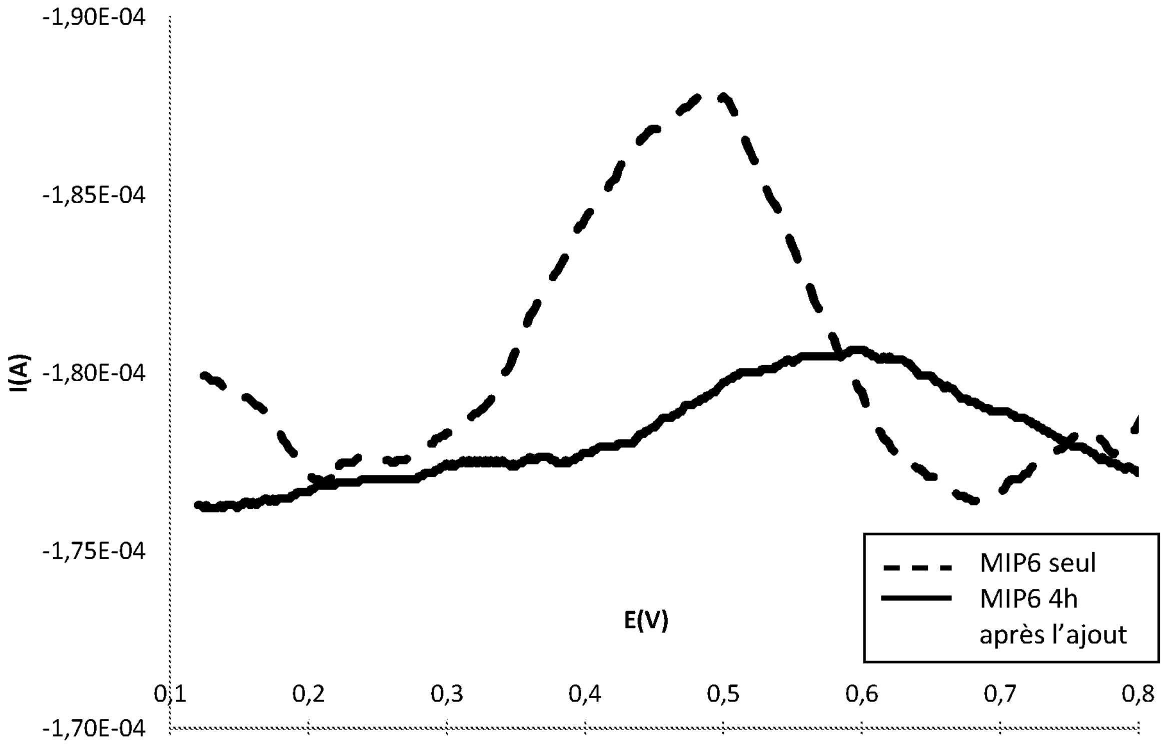


FIGURE 13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 7678870 B2


### Littérature non-brevet citée dans la description


- Directive 98/83/CE du Conseil. *Journal Officiel Des Communautés Européennes,* 03 Novembre 1998
- **P. PLAZA-BOLAÑOS et al.** Analytical methods and trends. *J. Chrom. A.,* 2010, vol. 1217, 6303-6326
- **X.-A. TON et al.** *Biosens. Bioelec.,* 2012, vol. 36, 22-28
- **P. TURKEWITSCH et al.** *Anal. Chem.,* 1998, vol. 70, 2025-2030
- **C.-Y, LIN et al.** *Chem. Eur. J.,* 2003, vol. 9, 5107-5110
- **V. SURYANARAYANAN et al.** *Electroanal.,* 2010, vol. 22, 1795-1811
- **T. PRASADA RAO et al.** *Anal. Chim. Acta,* 2006, vol. 578, 105-116
- **K. HAUPT et al.** *Chem. Rev.,* 2000, vol. 100, 2495-2504
- **V. PICHON.** *J. Chrom. A.,* 2007, vol. 1152, 41-53
- **T. L. PANASYUK et al.** *Anal. Chem.,* 1999, vol. 71, 4609-4613
- **K. HO et al.** *Anal. Chim. Acta,* 2005, vol. 542, 90-96
- **N. KIRSCH et al.** *Analyst,* 2001, vol. 126, 1936-1941
- **F. BAI et al.** *Macromolecules,* 2004, vol. 37, 9746-9752
- **J. P. LAI et al.** *Analytica chimica acta,* 2004, vol. 522 (2), 137-144
- **R. J. KRUPADAM et al.** *Analytical and Bioanalytical Chemistry,* 2010, vol. 397 (7), 3097-3106
- **R. J. KRUPADAM et al.** *Environmental Science & Technology,* 2009, vol. 43 (8), 2871-2877
- **R. J. KRUPADAM et al.** *Water research,* 2010, vol. 44 (3), 681-688
- **R. J. KRUPADAM et al.** *Journal of Nanoscience and Nanotechnology,* 2009, vol. 9, 5441-5447
- **R. J. KRUPADAM et al.** *Sensors and Actuators B : Chemical,* 2007, vol. 26, 444-451
- **F. L. DICKERT et al.** *Anal. Chem.,* 1999, vol. 71, 4559-4563
- **L. H. WEI et al.** *Journal of Environmental Science and Health,* 2010, vol. 45, 211-223
- **E. CORTON et al.** *Journal of Non-Crystalline Solids,* 2007, vol. 353 (8-10), 974-980
- **G. LIMOUSIN et al.** *Applied Geochemistry,* 2007, vol. 22 (2), 249-275